# EUROPEAN PATENT SPECIFICATION

(11) **EP 3 839 566 B1**
(45) Date of publication and mention of the grant of the patent: **10.12.2025**
(21) Application number: 19218302.8
(22) Date of filing: 19.12.2019
(51) Int. Cl.: G01S 17/42, G01S 17/87, G01S 7/481, G01S 7/484, G01S 7/48, G01S 17/88, G01C 15/00, G01S 17/66, G01S 17/89

(54) **GEODETIC SURVEYING DEVICE FOR MEASURING SCENES COMPRISING NATURAL AND ARTIFICIAL TARGETS**
VORRICHTUNG ZUR GEODÄTISCHEN VERMESSUNG ZUR MESSUNG VON SZENEN MIT NATÜRLICHEN UND KÜNSTLICHEN ZIELEN
DISPOSITIF DE RELEVÉ GÉODÉSIQUE POUR MESURER DES SCÈNES COMPRENANT DES CIBLES NATURELLES ET ARTIFICIELLES

(43) Date of publication of application: 23.06.2021
(73) Proprietor: Hexagon Technology Center GmbH, 9435 Heerbrugg (CH)
(72) Inventor: HINDERLING, Jürg, 9437 Marbach (CH); BESTLER, Simon, 88085 Langenargen (DE)
(74) Representative: Kaminski Harmann

(56) References cited:
- EP-A2- 1 321 777
- US-A1- 2009 235 543

## Description

### - FIELD OF THE INVENTION -

The invention relates to the field of geodetic surveying devices, in particular to the field of theodolites, total stations or scanning multistations, being used for measuring cooperative reflecting targets by laser radiation.

### - BACKGROUND TO THE INVENTION -

In geodetic surveying, opto-electronic instruments such as total stations, theodolites or lasertrackers are specifically used to measure 3D coordinates of cooperative reflecting targets. The cooperative reflecting target is of a specific design enabling the cooperation of the target with the surveying device in the sense of providing for a - on the device side - measurement radiation emission, - on the target side - measurement radiation reflection and - on the device side - measurement radiation detection cycle. For this purpose, various cooperative reflecting target designs have been developed in the fulfillment of different requirements regarding cost and accuracy of determinable 3D coordinates. Typical types of cooperative reflecting targets are, for example, retro-reflecting prisms, retro-reflecting triple mirrors, reflecting spherical targets and reflecting tape targets. The specific design of these cooperative reflecting targets aims at optimally reflecting measurement radiation - with which the target is targeted by the surveying device - back to the surveying device.

The determination of the 3D coordinates is based on measuring the direct distance from the total station or theodolite to the target and determining the horizontal angle or azimuth angle as well as the vertical angle or elevation angle under which the target is aimed at. Thereby the direct distance to the target can be determined very precisely, for example, using radiation based techniques relying on the principle of direct (pulse) time-of-flight, indirect (phase) time-of-flight measurements or interferometry. Furthermore, angle determination typically is based on emitting angle determination radiation to the target, wherein reflected angle determination radiation is detected/sensed by the device as a spot on an optical detector/sensor and wherein the position/location of the spot on the detector/sensor is determined. Based thereon and based on the orientation of the device the angles under which the target is aimed at are determinable. Referencing the position and orientation of the surveying device to either a local or global reference coordinate system further enables the determination of the 3D coordinates as either local or global 3D coordinates. As a result, the reflection characteristics of the target - to a great degree - determine the overall accuracy with which the 3D coordinates are measurable.

Effort has also been put into the development of opto-electronic geodetic surveying instruments which enable the measurement of any kind of surfaces of natural and artificial objects. The efforts aim at providing a surveying device for measuring natural and/or artificial objects by measuring so called reflectorless targets e.g. natural/artificial object surfaces to a high degree of accuracy. Surfaces of natural and/or artificial target objects are typically but not necessarily diffusely scattering surfaces. Therefore, the back-reflection of measurement radiation with which they are targeted is far from being optimized, which renders it difficult to accurately determine their 3D coordinates especially at distances longer than 2 km. Trying to overcome the difficulties, the development led, for example, to solutions using as measurement radiation a high intensity, highly collimated laser beam, wherein the high intensity and collimation of the laser beam ensure on the one hand the back-reflection of sufficient intensity of the measurement radiation to be detected/sensed and on the other hand that the spot size of the laser beam at the reflectorless target is sufficiently small to provide for a high lateral resolution of the resulting 3D coordinates. The target objects to be measured or monitored can have surfaces of any shape and can be e.g. cooling towers of energy plants, concrete dams, mountain sides etc. What is missing is a geodetic surveying device providing - besides its standard use case functionalities - a further functionality for precisely and efficiently digitizing a scene comprising such target objects. EP1321777A2 discloses a geodetic surveying device for measuring cooperative and diffusely reflecting targets.

In the light of the foregoing, it is an object of the present invention, to provide a geodetic surveying device with extended measuring functionality, wherein the extension of the measuring functionality relates to providing a further measurement mode allowing for efficiently digitizing and/or repetitively monitoring a scene comprising natural and/or artificial target objects.

### - SUMMARY OF THE INVENTION -

The invention relates to a geodetic surveying device or instrument, particularly a theodolite, total station, multistation or lasertracker, for measuring cooperative reflecting targets and diffusely reflecting targets, with a radiation source configured for generating distance measurement radiation, a base defining a standing axis, a support mounted on the base and being rotatable with respect to the base about the standing axis in a motorized manner, a carrier unit mounted on the support and being rotatable with respect to the support about an elevation axis, being essentially orthogonal to the standing axis, in a motorized manner, the carrier unit being configured for emitting the distance measurement radiation in the direction of a target axis, and receiving at least part of returning distance measurement radiation from within a receiver field of view, and comprising a distance measuring sensor configured to determine distance measuring data based on the distance measurement radiation, particularly based on the pulse time-of-flight principle, an angle determining unit configured to provide angle determination data for determining a pointing direction of the target axis, wherein the carrier unit is configured to provide for an adaptive selection of at least three different distance measuring beams generated from the distance measurement radiation, each of the three distance measuring beams having a pre-defined beam shape and illuminating a spot area at the target, wherein a first of the three distance measuring beams has a divergence angle smaller than 1 mrad, in particular and a circularly or elliptically shaped beam cross section, a second of the three distance measuring beams has a divergence angle within a divergence angle range ranging from 1 to 2 mrad, in particular and a circularly or elliptically shaped beam cross section, and a third of the three distance measuring beams has a divergence angle within a divergence angle range ranging from 2 to 15 mrad, wherein the first of the three distance measuring beams has the smallest divergence in comparison to the second and third of the three distance measuring beams, the second of the three distance measuring beams has a bigger divergence than the first of the three distance measuring beams, and the third of the three distance measuring beams has a maximum divergence, wherein the spot area illuminated by the first of the three distance measuring beams is the smallest of the three distance measuring beams, the spot area illuminated by the second of the three distance measuring beams is larger than the spot area illuminated by the first of the three distance measuring beams, and the spot area illuminated by the third of the three distance measuring beams is larger than the spot area illuminated by the second of the three distance measuring beams, and detect returning parts of the third distance measuring beam with an associated maximum receiver field of view within a range ranging from 2 to 15 mrad, and the geodetic surveying device is configured to use the first distance measuring beam to measure diffusely reflecting targets by making a distance to a diffusely reflecting target determinable as a mean distance averaged over the illuminated spot area within the receiver field of view associated with the first distance measuring beam, the second distance measuring beam to measure cooperative reflecting targets, and the third distance measuring beam to measure diffusely reflecting targets by making a distance to a diffusely reflecting target determinable as a mean distance averaged over the illuminated spot area within the maximum receiver field of view associated with the third distance measuring beam.

Thereby the base can be e.g. a tripod stand or any other stand being known to be used in order to fixedly install a geodetic surveying device at a position from which measurements are to be performed. Furthermore, the rotatability of the support about the standing axis enables changing the horizontal angle, sometimes also referred to as the azimuth angle, of the pointing direction. To determine the horizontal and elevation angle which define the targeting direction e.g. angle encoders can be used, wherein the angle encoders generate signals or angle determination data based thereon the according angle can be determined by the geodetic surveying device with a precision for example down to 1 arcsec. The distance measurement radiation is emitted in the direction of the target axis, wherein the target axis is defined by the design of the carrier unit. The pointing direction is the direction in which the target axis is pointing e.g. in the course of measuring a target or any kind of target object. A target e.g. a surface of a target object is measured by determining the horizontal and elevation angle of the pointing direction, wherein the device is targeting the target to be measured by the distance measurement radiation under said horizontal and elevation angle. Furthermore, the distance to the illuminated portion of the surface of the target is determined by the geodetic surveying device based on the pulse time-of-flight principle. In other words, the principle relies on measuring a time difference between the event of distance measurement radiation pulse emission and the event of receiving by the distance measuring sensor distance measurement radiation back-reflected from the target. The as measured time difference can be assigned to a distance travelled by the distance measurement radiation and thereby to a distance from the geodetic surveying device to the target. Thereby a distance measuring sensor can be of the waveform digitizing type (WFD) as described e.g. in EP3339901 B1 using high-SNR avalanche photodiode detectors.

The carrier unit being configured to provide three distance measuring beams, different from each other in their shape thereby provides the geodetic surveying device with three associated measurement functionalities. The shape of the three beams differ from each other at least by the beam divergence. The beam divergence is defined by the divergence angle, typically indicating the full cone angle of the emitted beam. The illuminated spot area at the target to be measured varies depending on the divergence of the distance measuring beam and the distance of the target to the surveying device. A first of the three distance measuring beams has a divergence angle which has a value d smaller than 1 mrad. This beam being a collimated distance measuring beam of high intensity is designed to measure reflectorless/diffusely reflecting targets, e.g. natural/artificial target surfaces with a high degree of spatial resolution. Typically, the spot area illuminated by the first distance measuring beam at the target is the smallest of all measuring beams. The collimated high intensity beam generates a small sized spot on the target surface making a high lateral spatial resolution achievable. Parts of the beam being reflected back from the reflectorless target to the surveying device are of sufficient intensity to be accurately detected by the distance measuring sensor. The distance measuring sensor detects parts of the beam being reflected back from the reflectorless target coming from within a defined receiver field of view. The receiver field of view, associated with the first distance measuring beam, is of an angle optimally corresponding to the divergence of the first distance measuring beam, wherein the receiver field of view is defined by an angle value in analogy to the divergence of a beam. For example the receiver field of view can be set to a size which covers not much more than 100 % of the first distance measuring beam divergence. One relevant advantage of such a design is that the distance measuring sensor is optimally protected from background radiation produced by e.g. sunlight. So called background radiation is one of the most limiting factors regarding distance jitter. For further reduction of background radiation created distance jitter the receiving wavelength can be spectrally narrowed by interference filters. A second of the three distance measuring beams has a divergence angle which has a value d in the range of 1 ≤ d ≤ 2 mrad. This beam having a slightly higher divergence than the first distance measuring beam is designed to measure cooperative reflecting targets to a very high accuracy, which is possible due to the excellent reflection characteristics of the cooperative reflecting targets such as corner cubes prisms. The cooperative reflecting targets have either a well-defined reflecting area such as e.g. reflective sheets or a center of symmetry like retro-reflecting prisms or hollow corner cubes. Due to the increased divergence of the second distance measuring beam, it is not necessary to aim accurately to these targets in order to get precise measurements. Furthermore, the distance jitter related influence of ambient light e.g. sunlight is less relevant due to the high intensity levels of the reflected distance measurement beam. Thereby, the spatial target location can precisely be defined in its azimuth and elevation angle. The receiver field of view typically but not necessarily is bigger than the one associated with the first distance measuring beam and typically covers 60 % to 120 % 60 % to 120 % of the second distance measuring beam divergence. Thereby, the carrier unit providing the first and the second distance measuring beams provides the geodetic surveying device with two associated measurement functionalities related to accurately determining 3D coordinates of either cooperative reflecting targets or of reflectorless targets/target objects having diffusely reflecting surfaces.

Complementary to the first and the second distance measuring beams, the carrier unit provides for a further, a third distance measuring beam having a maximum divergence angle which has a value dₘ in the range of 2 < dₘ ≤ 15 mrad. This beam having a maximum divergence is designed to measure natural and artificial targets/target objects which diffusely reflect at least part of distance measurement radiation. The maximum divergence angle results in this case in a significantly larger illuminated spot area at the target object compared to the spot area resulting at the reflectorless and cooperative reflecting target using the first and second distance measuring beams respectively. As a direct consequence the lateral resolution with which 3D coordinates of such target objects can be determined is reduced compared to the one, where 3D coordinates of reflectorless and cooperative reflecting targets are measured with the first and second measurement beam respectively. However, typically it is the precisely determined average distance under a well-defined aiming direction which is of interest for geodetic and industrial monitoring applications, e.g. where a scene comprising natural and/or artificial targets is digitized. Using the measurement beam having a maximum divergence provides precise average distances under a well-defined aiming direction, wherein accuracies of 10 µm are achievable. Due to the maximum divergence 2 < dₘ ≤ 15 mrad of the distance measuring beam the distance information carried by the part of the distance measuring beam being back-reflected to the surveying device is generated from a significantly larger spot area, which makes the distance measurement less prone to distance influencing fluctuations - for example relating to an object of a size being significantly smaller than the spot size being moved at the natural target - occurring within this large area. In accordance to the maximum divergence angle of the third distance measuring beam a maximum receiver field of view having an angle rₘ within the range of 2 < rₘ ≤ 15 mrad is associated with the third beam, wherein the distance measuring sensor determines a distance to such a natural and/or artificial target based on at least part of the distance measuring beam being back-reflected to the surveying device.

The carrier unit providing a first a second and a third distance measuring beam as described provides a geodetic surveying device or instrument having a measurement functionality enabling the measurement of natural or artificial targets/target objects based on determining the distance from the surveying device to the natural or artificial target/target object and the horizontal and elevation angle under which the target is aimed at.

According to an embodiment of the invention the carrier unit can further have a telescope unit with a main telescope objective, wherein the main telescope objective defines the target axis, and emitted and received distance measurement radiation passes through the main telescope objective.

According to a further embodiment of the invention the geodetic surveying device can comprise a divergence setting unit comprising a set of beam shaping optics, particularly wherein the set comprises at least two of a divergence lens, a light diffuser, and a diffractive optical element, particularly a holographic optical element.

Thereby the divergence setting unit enables the carrier unit to provide for the first, second and third distance measuring beam aiding the beam shaping optics, wherein the beam shaping optics change the shape of a distance measurement radiation mainly with respect to the divergence but may also change its intensity distribution.

According to an embodiment of the invention the set of beam shaping optics can be arranged on a rotatable revolver-carrier or translatable shifting-carrier, wherein the divergence setting unit can be configured to provide for the adaptive selection of at least two pre-defined beam shapes of a distance measuring beam by selectively positioning different beam shaping optics of the set of beam shaping optics to be traversed by the emitting distance measurement radiation via rotating the revolver-carrier or translating the translatable shifting-carrier.

Thereby, a rotatable revolver-carrier can, for example, be disk-shaped and have a rotation axis, wherein the beam shaping optics are arranged around the rotation axis of the revolver-carrier. By rotating the revolver-carrier the beam shaping optics carried by the revolver-carrier can be adaptively and selectively positioned such that, for example, a specific divergence lens is traversed by the emitting distance measurement radiation. The revolver-carrier can as well comprise a recess which, if positioned to be traversed by the emitting distance measurement radiation, does not impact the shape of the distance measurement radiation. In analogy to the revolver-carrier principle the beam shaping optics can also be arranged on a strip-shaped carrier, which can be shifted by translation along a shifting axis which is defined by a guiding reception and configured to receive the strip-shaped carrier. An alternative carrier can be realized as a flexure supported parallelepiped, whereas the beam shaping optics are arranged at the parallel moving faces.

According to a further embodiment of the invention the geodetic surveying device can comprise a field of view expander optics being part of a field of view expansion setting unit arranged in the carrier unit, wherein the field of view expansion setting unit is configured to provide for an adaptive selection of at least two different modes of field of view expansion, wherein one mode relates to a zero field of view expansion mode providing the receiver field of view being smaller than or equal to 2 mrad, and another mode relates to a monitoring field of view expansion mode providing a maximum receiver field of view within the range ranging from 2 to 15 mrad.

Thereby the field of view expansion setting unit serves the purpose of synchronizing the receiver field of view to the divergence of the distance measuring beam in use to measure a target. The field of view expansion setting unit is arranged in front of the photonic distance measuring sensor. Furthermore, the field of view expander optics can comprise, for example, a field of view expanding micro-lens which focuses the - within the expanded field of view associated with the micro-lens - received at least part of returning distance measurement radiation on the distance measuring sensor.

According to an embodiment of the invention the field of view expansion setting unit can be configured to provide for at least two different modes of field of view expansion by switchably positioning the field of view expander optics either to be traversed by the at least part of the returning distance measurement radiation or to be passed by by the at least part of the returning distance measurement radiation.

Thereby the field of view expander optics, for example, can be slid into and out of the receiver beam path or swiveled in and out of the receiver beam path in front of the distance measuring sensor. The zero field of view expansion mode would then relate to a state where no field of view expander optics of the field of view expansion setting unit is positioned in the receiver beam path, wherein the monitoring field of view expansion mode would relate to a state where field of view expander optics is positioned in the receiver beam path.

The field of view expansion setting unit can be an arrangement of switching apertures of different sizes in the focal plane of the receiving objective. The zero field of view expansion mode would then relate to a state where the smallest aperture is positioned in the receiver beam path.

According to a further embodiment of the invention the geodetic surveying device can have an optical fiber and fiber-collimator, wherein the generated distance measurement radiation is guided from the radiation source by the optical fiber and through the fiber-collimator to the divergence setting unit.

According to an advantageous embodiment of the invention the radiation source can be a laser diode seeded erbium doped fiber amplified radiation source (EDFA), particularly generating distance measurement radiation having a wavelength in the wavelength range of 1500 to 1600 nm, or bismuth-doped phosphosilicate fiber amplified radiation source, particularly generating distance measurement radiation having a wavelength in the wavelength range of 1300 to 1370 nm or ytterbium doped fiber amplified radiation source (YDFA), particularly generating distance measurement radiation having a wavelength in the wavelength range of 950 to 1100 nm.

According to an alternative and advantageous embodiment the geodetic surveying device comprises a first radiation source, in particular a laser diode, generating first distance measurement radiation, in particular in the visible light range, and a second radiation source, different from the first radiation source, generating second distance measurement radiation, in particular in the near infrared region. The carrier unit then comprises a first distance measuring sensor, and a second distance measuring sensor, wherein the first and the second distance measuring beams are generated from the first distance measurement radiation, the third distance measuring beam is generated from the second distance measurement radiation, the first distance measuring sensor is configured to determine distance measuring data based on first distance measurement radiation, and the second distance measuring sensor is configured to determine distance measuring data based on the second distance measurement radiation.

The first distance measuring sensor and the second distance measuring sensor can be integrated into one single module whereas the control signals for the emitter are demultiplexed to the first and second emitting radiation sources and the received signals from the two distance measuring sensors are multiplexed to a common time measurement module.

The first radiation source can generate first distance measurement radiation having a wavelength shorter than 1100 nm, for example in the visible light range, and is used to generate the two distance measuring beams having divergences smaller than 1 mrad and 1 ≤ d ≤ 2 mrad. The second source can generate second distance measurement radiation having a wavelength longer than 1000 nm, for example 1064 nm, 1300 nm or 1550 nm and is used to generate the third distance measuring beam having the maximum divergence 2 < dₘ ≤ 15 mrad.

According to a further embodiment of the invention the carrier unit can have a first optical transmission channel configured for emitting first distance measurement radiation in the direction of the target axis, a first optical receiving channel configured for receiving at least part of returning first distance measurement radiation from within a first receiver field of view, particularly being smaller than or equal to 2 mrad, and comprising a first distance measuring sensor configured to determine first distance measuring data based on the first distance measurement radiation, particularly based on the pulse time-of-flight principle, a second optical transmission channel configured for emitting second distance measurement radiation in an emission direction parallel to the target axis, a second optical receiving channel configured for receiving at least part of returning second distance measurement radiation from within a second receiver field of view and comprising a second distance measuring sensor configured to determine second distance measuring data based on the second distance measurement radiation, particularly based on the pulse time-of-flight principle, wherein the second optical transmission channel comprises an optical collimator configured to provide the second distance measurement radiation with a maximum divergence angle within a divergence angle range ranging from 2 to 15 mrad, and the second optical receiving channel is configured to have a maximum receiver field of view within a range ranging from 2 to 15 mrad, and the geodetic surveying device is configured to use the first distance measurement radiation to measure cooperative reflecting and diffusely reflecting targets based on receiving at least part of returning first distance measurement radiation from within the first receiver field of view, and the second distance measurement radiation to measure diffusely reflecting targets by making a distance to a diffusely reflecting target determinable as a mean distance averaged over the illuminated spot area within the maximum receiver field of view associated with the second distance measurement radiation.

According to a further embodiment of the invention the carrier unit can further have a telescope unit with a main telescope objective, wherein the main telescope objective defines the target axis, and the first optical transmission channel and the first optical receiving channel pass through the main telescope objective, and a second objective, wherein the second objective defines the emission direction of the second distance measurement radiation parallel to the target axis, and the second optical transmission channel and the second optical receiving channel pass through the second objective.

According to a further embodiment the carrier unit can have a telescope unit with a main telescope objective, wherein the main telescope objective defines the target axis, and the first optical transmission channel and the first optical receiving channel pass through the main telescope objective, a second objective, wherein the second objective defines the emission direction of the second distance measurement radiation parallel to the target axis, and the second optical transmission channel passes through the second objective, and a third objective, wherein the second optical receiving channel passes through the third objective.

According to a further embodiment of the invention the first optical transmission channel can comprise a divergence setting unit configured to provide for an adaptive selection of at least two pre-defined different divergence angles of the first distance measurement radiation, wherein the two different divergence angles are different from the divergence angle provided by the optical collimator of the second optical transmission channel.

According to a further embodiment of the invention the geodetic surveying device can have a first radiation source and a second radiation source which is different from the first radiation source, wherein the first radiation source is configured to generate the first distance measurement radiation, in particular with a wavelength shorter than 1100 nm, and the second radiation source is configured to generate the second distance measurement radiation, in particular with a wavelength longer than 1000 nm. Or the surveying device can have one radiation source wherein the one radiation source is configured to generate the first and the second distance measurement radiation.

According to a further embodiment, the first optical transmission channel and the first optical receiving channel can be attributed to a first electronic distance measurement (EDM) unit, and the second optical transmission channel and the second optical receiving channel can be attributed to a second electronic distance measurement (EDM) unit, wherein the first EDM unit is configured to determine a first distance based on the first distance measuring data and the second EDM unit is configured to determine a second distance based on the second distance measuring data, respectively, in particular wherein the geodetic surveying device comprises a referencing unit configured to reference the first and the second distance with respect to a common frame of reference.

According to an embodiment of the invention the carrier unit can comprise an attachment module and a device interface for coupling and de-coupling the attachment module, the attachment module comprising the second optical transmission channel, the second optical receiving channel and the second objective, or the second and third objective, particularly wherein the attachment module further comprises the second EDM unit wherein the first and the second EDM unit are configured to establish a communicative connection with each other. The attachement module can also be fixedly mounted to the geodetic surveying device such that it forms an integrated part of the device.

According to a further embodiment of the invention the geodetic surveying device can have an optical delay fiber path and an internal optical reference path, wherein the second optical transmission channel is configured to be seeded with second distance measurement radiation via the optical delay fiber path, the second EDM unit is configured to determine the second distance based on at least part of distance measurement radiation returning via an outside target, and distance measurement radiation received by the second distance measuring sensor via the internal optical reference path. In particular, the geodetic surveying device can further have an optical Y-type fiber-coupler being configured to provide part of the second distance measurement radiation to the optical delay fiber path and another part of the second distance measurement radiation to the internal reference path.

According to another embodiment of the invention the geodetic surveying device can have an automatic target recognition (ATR) functionality for automatically finding and measuring cooperative reflecting targets and a computer for controlling the geodetic device, wherein the computer is configured to provide a controllability of the geodetic device in at least two different measurement modes, a first cooperative reflecting target measurement mode related to automatically finding and measuring cooperative reflecting targets, aiding the ATR functionality, and a second monitoring mode related to measuring diffusely reflecting targets based on using distance measurement radiation having a maximum divergence angle within a divergence angle range ranging from 2 to 15 mrad, and receiving at least part of returning distance measurement radiation from within a maximum receiver field of view within the range ranging from 2 to 15 mrad, wherein based thereon and based on angle determination data a distance to a diffusely reflecting target and 3D coordinates of the diffusely reflecting target are determinable.

According to a further embodiment of the invention the computer can be configured to provide a controllability of the geodetic device in a further automatic calibration mode, wherein the automatic calibration mode relates to - in a first step - automatically finding and measuring in the cooperative reflecting target measurement mode cooperative reflecting targets, wherein based thereon a reference coordinate system is defined by the computer and - in a second step - switching to the monitoring mode and generating distance measuring data and angle determination data related to measuring diffusely reflecting targets using distance measurement radiation having a maximum divergence angle based on receiving at least part of returning distance measurement radiation from within a maximum receiver field of view and referencing the therefrom generated distances to diffusely reflecting targets and 3D coordinates of diffusely reflecting targets to a common coordinate system, particularly an absolute coordinate system, by the computer based on the reference coordinate system.

Thereby the ATR functionality is provided, for example, by an ATR unit, wherein the ATR unit emits target finding radiation into a wide angular range to cover a large region potentially comprising a cooperative reflecting target. In the case the target finding radiation finds a cooperative reflecting target, at least part of the target finding radiation is back reflected from the cooperative reflecting target to the surveying device. The ATR unit is further configured to receive back reflected target finding radiation and to - based thereon - determine a targeting direction towards the cooperative reflecting target. Based on the as determined targeting direction the ATR unit can instruct the surveying device to orient itself towards the cooperative target, such that the target can be measured by the geodetic surveying device. For example, the cooperative reflecting target measurement mode can be used to perform routine measurements related to determine 3D coordinates of cooperative reflecting targets. These routine measurements can also be used, for example, to reference the position and orientation of the surveying device to a local or global outer coordinate system. In addition to the routine measurement mode the monitoring mode enables the measurement of extended natural and man-made target objects, for example, hillsides, bridges, dams or excavation pits. Thereby, the measured natural targets can be vegetated or not. Targeting directions towards natural and artificial targets to be measured can be predefined e.g. based on a local or global coordinate system, wherein as-defined targets, in order to be monitored, can be measured automatically and sequentially in a scan-like manner. The measurement sequence automatically can be repeated every day, every hour, or in time intervals essential for the monitored target object to guarantee safety and in case of danger providing warnings and alarms.

According to a further embodiment of the invention generating distance measuring data and angle determination data and based thereon distances to diffusely reflecting targets and 3D coordinates of diffusely reflecting targets in the monitoring mode can be based on at least one of the following data generation modes differing from each other at least by a predefined data generation frequency, the data generation modes being, a fast measurement mode, particularly with a data generation frequency of at least 5 kPts/s, a standard measurement mode, particularly with a data generation frequency of less than 5 kPts/s, a precise measurement mode, particularly with a data generation frequency of less than 1 kPts/s, and a high accuracy single point measurement mode, wherein based on as-generated distance measuring data and angle determination data - generated in the course of measuring a diffusely reflecting target - a 3D velocity vector and/or a radial velocity related to the movement of the diffusely reflecting target is determinable.

Determining 3D coordinates as the result of a scan series of extended surface patches of target objects using such data generation modes enables for example to monitor movements of hillsides or walls of excavation pits which helps in the reliable prediction of landslides, which is of interest, for example, in mining applications. Thereby it is a key feature, that a velocity vector of a repeatedly measured natural target, which diffusely reflects distance measurement radiation, can be determined in three dimensions and that the measurement itself is not sensitive, for example, to irrelevant movement of small entities such as rolling pebbles and that the measurement can be conducted on both vegetated and not vegetated areas. The latter is only possible due to the spatially extended illuminated spot area of the target surface resulting in a very highly resolved and repeatable average distance of the illuminated and sensed surface.

### - BRIEF DESCRIPTION OF THE DRAWING -

By way of example only, preferred embodiments of the invention will be described more fully hereinafter with reference to the accompanying figures, wherein:
Figure 1 shows a geodetic surveying device according to the prior art;
Figure 2 shows a schematic representation of three different distance measuring beams provided by the carrier unit;
Figures 3 a and b show possible embodiments of the arrangement of technical features of coaxial morphology providing the carrier unit and the surveying device with the inventive functionality;
Figure 4 shows another possible embodiment of the arrangement of technical features providing the carrier unit and the surveying device with the inventive functionality;
Figure 5 shows a use-case resulting from the extended functionality of an inventive surveying device.

### - DETAILED DESCRIPTION OF THE DRAWINGS -

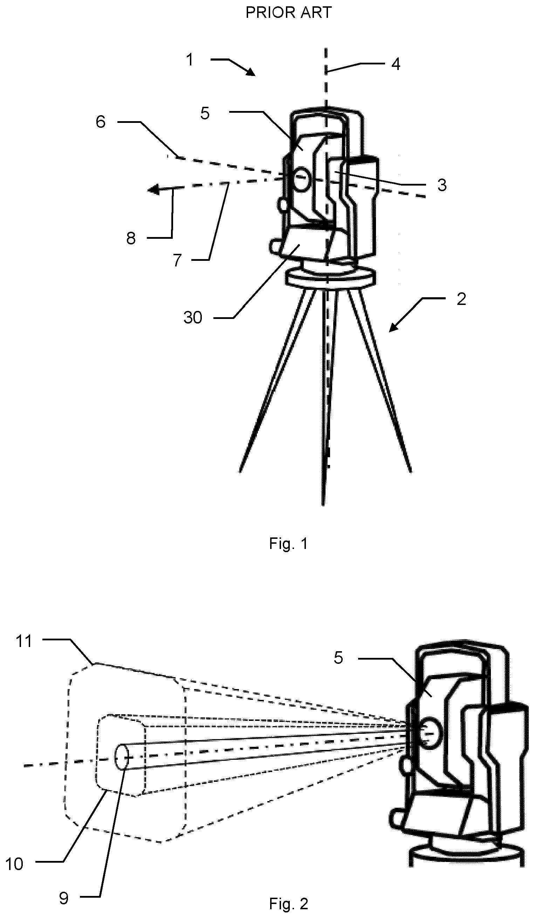

**Figure 1** shows a generic type geodetic surveying device 1, more particularly a total station, a multistation or a lasertracker, having a tripod stand 2 as a base for positioning the geodetic surveying device at a location from which targets can or have to be measured. A U-shaped support 3 is mounted to the tripod, wherein the tripod defines a standing axis 4 around which the support can be rotated for horizontally aligning the geodetic surveying device towards targets to be measured. A carrier unit 5 is rotatably mounted to the support 3, wherein the rotation axis 6 around which the carrier unit can be rotated with respect to the support is essentially orthogonal to the standing axis 4. By rotating the carrier unit around the rotation axis 6 the geodetic surveying device can be vertically aligned towards targets to be measured. Thereby the rotation axis 4 and the rotation axis 6 define an azimuth axis and elevation axis respectively. A generic type geodetic surveying device further comprises a computer 30 for controlling the different functionalities of the device and communicatively connected to the computer 30 a plurality of motors for motorizing the alignment of the geodetic surveying device and a plurality of angle encoders for determining horizontal/azimuthal and vertical/elevation angles. The carrier unit emits distance measurement radiation in the direction of a target axis 7, wherein the target axis 7 points in a pointing direction 8 being defined by the horizontal and vertical angle. The carrier unit 5 further comprises a distance measuring sensor which is communicatively connected to the computer 30. The distance measuring sensor can, for example, be an avalanche photo diode type sensor as part of a direct time-of-flight rangefinder module with a pulsed modulation scheme as known from signal coding in the application field of telecom technology, which generates distance measuring data upon receiving distance measurement radiation which is back-scattered from a target to be measured. The distance measuring sensor has a specific field of view, which is synchronized or matched to the distance measurement radiation used, wherein the sensor detects/senses distance measurement radiation which is reflected within this specific field of view. Thereby the computer 30 can - based on the generated distance measuring data - determine a distance to the target which is measured. For the simplest case, the principle behind the distance determination is the principle of pulse time-of-flight measurement. The principle relies on measuring the time difference between the event of emitting a distance measurement radiation pulse towards a target and the event of detecting/sensing a pulse of reflected - from the target to be measured - distance measurement radiation. The computer 30 of the geodetic surveying device assigns a specific distance to the measured time difference which is the difference from the device to the target. Furthermore, the pointing direction towards the target to which the distance is measured is determinable based on the horizontal and vertical angle, wherein based thereon the computer 30 can determine 3D coordinates of the measured target.

**Figure 2** shows a possible embodiment of the carrier unit 5 and its functionality. The carrier unit comprises a laser-rangefinder module and is configured to provide for three different distance measuring beams, which are generated from distance measurement radiation, wherein the three beams are coaxially - with respect to the target axis - emitted. Each of the three distance measuring beams is designed for optimally measuring a specific group of targets or collecting target specific spatial parameters. A first distance measuring beam 9 is a collimated high intensity beam for measuring reflectorless targets. In comparison to the other two distance measuring beams it has the smallest divergence being smaller than 1 mrad, typically 0.25 mrad. Thereby reflectorless targets which diffusely reflect incident radiation can be measured with sufficiently high spatial resolution.The location of the laser spot on the object surface is well defined and the measured distance can be assigned to a single point of the target. Thereby, the first distance measuring beam enables the accurate measurement of diffusely reflecting/reflectorless targets with a collimated high intensity (per unit area) beam, wherein the spot size at the reflectorless target is of a size which keeps spot size related measurement inaccuracies at a minimum level. The distance measurement with the first distance measuring beam is of highest accuracy with a typical distance resolution which is higher than than 10 um. This is achieved by a much faster internal measurement rate than the scanning rate. For example the distance measurement rate is 5MHz, whereas the effective rate is only 5k points per second. So totally 1000 raw distances contribute to a single distance measurement by averaging yielding an improved accuracy.

Furthermore, Figure 2 shows the carrier unit providing a second distance measuring beam 10 having a bigger divergence, with a divergence angle d lying within the range of 1 ≤ d ≤ 2 mrad, than the first beam. The second distance measuring beam 10 is specifically designed for measuring cooperative reflecting targets. With its larger divergence the second beam irradiates a larger area, wherein a cooperative target located inside the irradiated area reflects distance measurement radiation with sufficiently high intensity to be detected/sensed by the distance measuring sensor. Thereby, the second distance measuring beam enables the accurate measurement of cooperative reflecting targets although the cooperative target does not have to be aimed at precisely by the pointing axis 8. This is beneficial to speed up the user workflow because the aiming procedure can be bridged. The beam cross section of the measuring beam 10 is usually of rectangular shape, but any other shape would be also possible.

Figure 2 shows a further third distance measuring beam having a maximum divergence with a divergence angle dₘ lying within the range of 2 < dₘ ≤ 15. With its maximum divergence the third beam 11 irradiates the biggest spot area at the target in comparison to the first and second beam. The third distance measuring beam 11 is specifically designed for measuring diffusely large area reflecting targets whereas the surface of the object could be of any shape and morphology. Therefore, also the optical property can vary drastically, for example when aiming to a rock slope covered partially with some vegetation, then optical radiation is composed by partially diffuse scattered and partially specular reflected constributions. In order to receive distance measurement radiation reflected from a natural or artificial target with sufficiently high intensity the carrier unit is configured for receiving said radiation from within a maximum receiver field of view. Thereby the size of the receiver field of view is matching or synchronized to the divergence of the third distance measuring beam and has a value rₘ lying within the range of 2 < rₘ ≤ 15 mrad.

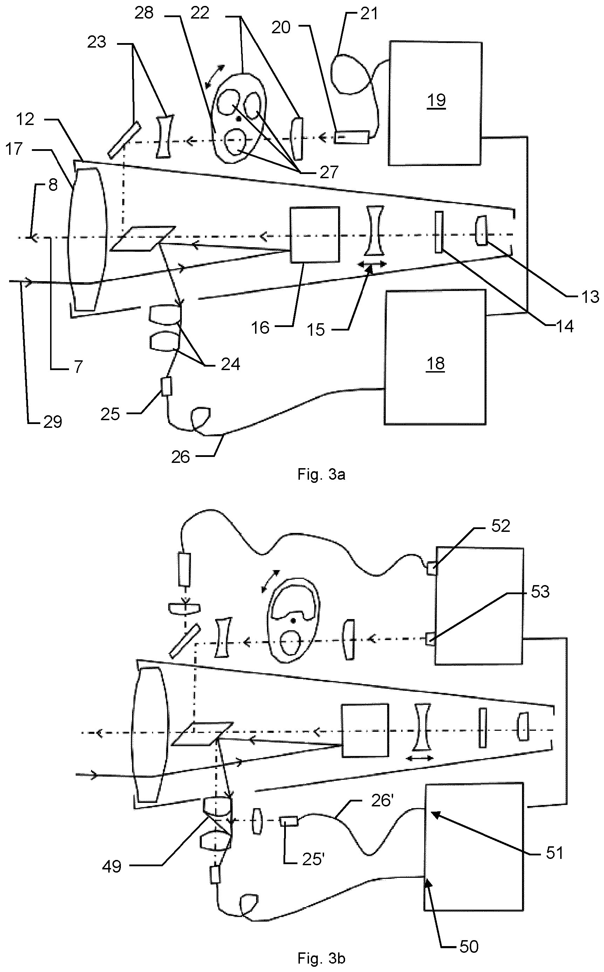

**Figure 3a** shows a possible embodiment of the arrangement of the technical features providing the carrier unit and the surveying device with the functionality as schematically illustrated in Figure 2. Figure 3a shows a telescope unit 12, defining the target axis 7, with an eyepiece 13, a reticle 14, focusing optics 15, a dielectric beam splitter 16, and a main telescope objective 17. Alternatively, instead of a visual telescope, a completely electronic telescope consisting of an imaging system with a high resolution optics could be used. Furthermore, Figure 3a shows an electronic distance measurement (EDM) unit 18 connected to a radiation source 19, for example a laser diode seeded EDFA typically having a wavelength of 1550 +/- 50 nm or YDFA typically having a wavelength of 1025 +/- 75 nm. The radiation source 19 is connected to a first fiber-collimator 20 by a first optical fiber 21, wherein the distance measurement radiation generated by the radiation source 19 is guided by the optical fiber 21 from the radiation source to the first fiber-collimator 20. The radiation leaves the first fiber-collimator 20 to pass through the divergence setting unit 22 and is coupled into the telescope unit 12 by a deflection unit 23 to be emitted along the target axis 7 into the pointing direction 8 through the main telescope objective 17. Further illustrated in Figure 3a are field of view expander optics 24 in front of the fiber-entrance facet 25 of a second optical fiber 26, which is connected to the EDM unit 18. The second optical fiber 26 or receiving fiber is typically a multimode fiber of large core diameter which simplifies the design of a large required field of view conjugated to the third distance measuring beam.

According to the embodiment shown in Figure 3a, the radiation source 19 can be arranged, for example, in the stand, in the support or inside the carrier unit. The distance measurement radiation generated by the source is guided via the optical fiber 21 to the first fiber-collimator 20 performing a pre-collimation of the radiation. The pre-collimated radiation then hits the divergence setting unit 22. As shown in Figure 3a the divergence setting unit 22 has a set of beam shaping optics 27. The beam shaping optics can be arranged, for example, on a rotatable revolver-carrier 28, having a rotation axis - indicated by the black dot on the revolver-carrier - around which it can be rotated. The beam shaping optics can comprise different optical elements, for example, divergence lenses, light diffusers or diffractive optical elements such as a holographic optical element. Each of the beam shaping optics shapes the measurement radiation upon trans-radiation into a distance measuring beam having a specific shape and divergence. If the optical elements are arranged on a revolver-carrier, each optical element is arranged at a specific position on the revolver-carrier, wherein the specific positions of the optical elements are arranged around the rotation axis of the revolver-carrier. The rotation axis of the revolver-carrier is offset parallel to an axis defined by the measurement radiation leaving the first fiber-collimator 20, such that upon rotation of the revolver-carrier around its rotation axis selectively one of the beam shaping optics is positioned in the beam path of the distance measurement radiation and trans-radiated by the distance measurement radiation. Furthermore, the revolver-carrier can as-well comprise a recess at a specific position on the revolver-carrier, wherein upon trans-radiation by distance measurement radiation no change in the divergence of the pre-collimated radiation is effected. The rotation of the revolver-carrier ideally is motorized and controlled automatically and by the measurement device, for example, by the computer 30 being communicatively connected to the driving units of the revolver-carrier.

After trans-radiating the divergence setting unit the distance measurement radiation is coupled into the telescope unit via a deflection unit as a distance measuring beam having a specific divergence. The distance measuring beam with its specific divergence is further deflected inside the telescope unit to be emitted along the target axis and into the pointing direction through the telescope unit's main telescope objective. The as-emitted distance measurement radiation as distance measuring beam having a specific divergence, as it impinges a target, is reflected from the target back to the device. The back-reflected distance measurement radiation as back-reflected distance measuring beam 29 - according to the embodiment shown in Figure 3a - passes through the main telescope objective 17 serving as efficient light collecting lens. Inside the telescope unit the back-reflected distance measuring beam 29 is deflected towards the field of view expander optics 24. The field of view expander optics shown in Figure 3a enables the carrier unit to detect returning parts of the third distance measuring beam with an associated maximum receiver field of view with a size lying within a range ranging from 2 to 15 mrad. The field of view expander optics can be part of a field of view expansion setting unit. The field of view expansion setting unit can comprise the field of view expander optics - in analogy to the revolver-carrier and the beam shaping optics - on a revolver-carrier or, for example, on a shifting-carrier. Ideally the revolver-carrier or the shifting-carrier are motorized and automatically controlled, for example, by the computer 30 of the surveying device, wherein the computer is communicatively connected to the driving unit of the revolver-carrier or shifting-carrier. Thereby, the field of view expansion setting unit can provide different modes of field of view expansion by selectively positioning specific field of view expander optics into the beam path of the back-reflected distance measuring beam in front of the second optical fiber-entrance facet 25. The mode of field of view expansion can be synchronized to the divergence of the distance measuring beam. Thereby the field of view expansion setting unit can provide for at least to different modes, wherein one mode relates to providing a size of the receiver field of view to be smaller than or equal to 2 mrad - relating to a zero field of view expansion mode being realized, for example, by positioning a recess of the revolver-carrier or shifting-carrier in the beam path - and another monitoring field of view expansion mode relating to provide a maximum receiver field of view having a maximum size within the range ranging from 2 to 15 mrad. By trans-radiating the field of view expander optics the back-reflected distance measuring beam 29 is focused on the second optical fiber-entrance facet 25, which is connected by the second optical fiber 26 to the EDM unit 18.

According to the embodiment illustrated in Figure 3a, the distance to the target to be measured is determined based on the pulse time-of-flight principle. Therefore, a start-pulse is directly deflected by a beam splitter (not shown) located in the transmission channel from the distance measurement radiation to the second optical fiber 26, to generate a start signal indicating a point in time from which the time difference to the point in time when back-reflected distance measurement radiation is detected/sensed is measured. Based on the measured time difference a distance to the measured target is determinable by the surveying device.

The geodetic surveying device according to the invention is configured to automatically use one of the three distance measuring beams in accordance with a specific type of target to be measured. Thereby, the computer 30 of the surveying device can be controlling the divergence setting unit and the field of view expansion setting unit and depending on the setup synchronize the receiver field of view to the set divergence of the used distance measuring beam.

**Figure 3b** shows another possible embodiment of the arrangement of the technical features providing the carrier unit and the surveying device with the inventive functionalities. The coaxial integration of the emitting and receiving beams or channels in object space is comparable to that of figure 3a however the third distance measuring beam with an associated maximum receiver field of view with a size lying within a range ranging from 2 to 15 mrad is partially separated from the other two measurent channels. The first and second measurement beams have their own laser source preferably a laser diode with a visible wavelength, and the third measurement beam is generated by a fiber laser, a seeded optical amplifier, or a Q-switched microchip laser (52) of higher power at a wavelength in the near infrared, for example 1310 nm or 1550 nm. On receiver side, the channel receiving distance measurement radiation of the third distance measuring beam, is also separated from the channel receiving distance measurement radiation of the first and second distance measuring beams. The channel receiving distance measurement radiation of the first and second distance measuring beams is equipped with a common field of view of 2 mrad and the channel receiving distance measurement radiation of the third distance measuring beam has its larger field of view for example of the size of 4 mrad and is of quadratic shape. For example the shape and size of the corresponding field of view can be realized by an appropriate field stop in front of the fiber-entrance surface 25' of a second optical fiber 26'. To have optimized quantum efficiency and sensitivity, the receiving channel receiving distance measurement radiation of the first and second distance measuring beams is equipped with a photodetector (APD, SPAD-array) with maximum sensitivity for the wavelength of the first and second distance measuring beams, whereas the channel receiving distance measurement radiation of the third distance measuring beam is equipped with a photodetector having maximum sensitivity for the wavelength of the third distance measuring beam. The wavelength separation in the receiver channel can be realized by using a dichroic beam splitter 49 which separates the radiation to the assigned receivers. Because of the low levels of the received signals, preferred photodiodes are photodiodes having an intrinsic amplification mechanism. For wavelengths shorter than 1100 nm candidates are Silicon-APDs, SiPM and photomultilpiers, whereas for wavelengths longer than 1000nm candidates are InGaAs-APDs, InGaAs-SPADs or InGaAs photodiodes with burried multichannel discrete amplification (DAPDs).

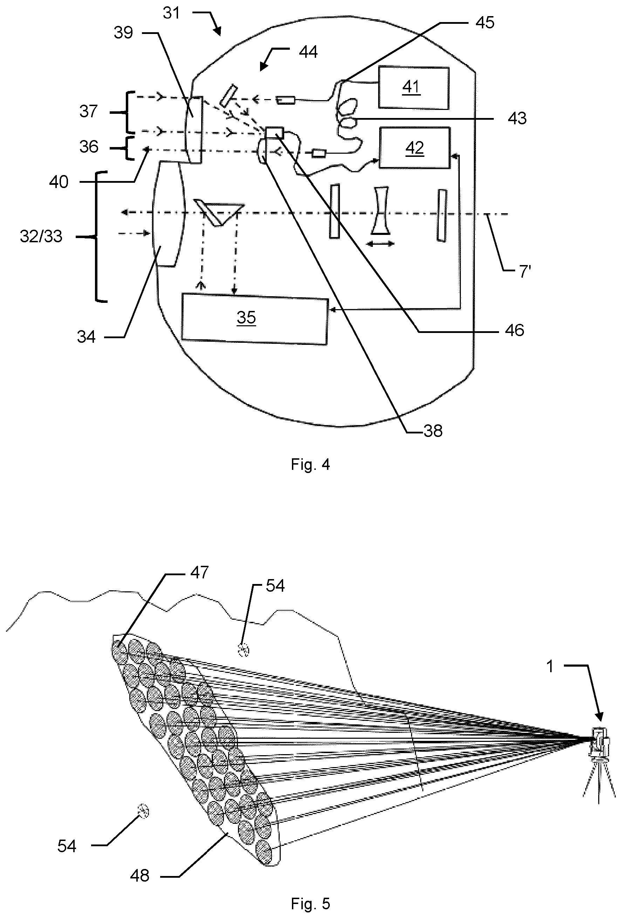

**Figure 4** shows another possible embodiment of the arrangement of technical features providing the carrier unit and the surveying device with the inventive functionality. The carrier unit 31 has a first optical transmission channel 32 and a first optical receiving channel 33. First distance measurement radiation is emitted by the first optical transmission channel in the direction of the target axis 7' towards a target - being a reflectorless target and/or a cooperative reflecting target - to be measured. First distance measurement radiation returning from the target is received by the first optical receiving channel, wherein the returning first distance measurement radiation is returning from within a first receiver field of view which is matched or synchronized to the divergence of the first distance measurement radiation. The first receiver field of view typically is of a size smaller than or equal to 2 mrad. The first optical receiving channel further comprises a first distance measuring sensor being used to determine first distance measuring data based on the detected/sensed returning first distance measurement radiation. The principle applied in determining the first distance measuring data can be, for example, the pulse time-of-flight principle. Based on the generated first distance measuring data the surveying device can determine a distance to a target to be measured.

The carrier unit 31 of Figure 4 further comprises a telescope unit with a main telescope objective 34. Thereby the main telescope objective 34 defines the target axis 7' and the first optical transmission channel 32 and the first optical receiving channel 33 pass through the main telescope objective 34. The first transmission channel - in analogy to the embodiment shown in Figures 3a and 3b - can comprise a divergence setting unit providing by adaptive selection, for example, two pre-defined and mutually different divergence angles to the first distance measurement radiation. One of the two divergence angles can, for example, be used to measure reflectorless targets and the other one to measure cooperative reflecting targets. As shown in Figure 4 the first optical transmission channel and the first optical receiving channel are attributed to a first EDM unit 35. Thereby the first EDM unit 35 uses a radiation source generating first distance measurement radiation. Thereby, the first EDM unit 35 can determine a distance to a target to be measured based on the generated first distance measuring data according to the pulse time-of-flight principle.

The carrier unit of Figure 4 further comprises a second optical transmission channel 36 and a second optical receiving channel 37. The second optical transmission channel emits second distance measurement radiation for measuring natural targets in an emission direction being parallel to the target axis 7'. Thereby the second distance measurement radiation passes through an optical collimator 38 of the second optical transmission channel to receive a maximum divergence angle - being different from the divergence angle being settable by the first optical transmission channel - within the range of 2 to 15 mrad. Second distance measurement radiation returning from diffusely reflecting targets is received by the second optical receiving channel, wherein the returning second distance measurement radiation is returning from within a second receiver field of view. The second receiver field of view typically is of a maximum size lying in the range of 2 to 15 mrad, whereas the angle of the receiver field of view is preferably defined by the aperture of the fiber endpiece 46. The second optical receiving channel further comprises a second distance measuring sensor 42 being used to determine second distance measuring data based on the detected/sensed returning second distance measurement radiation. The principle applied in determining the distance measuring data can be, for example, the pulse time-of-flight principle. Based on the generated second distance measuring data the surveying device can determine a distance to natural and/or artificial targets to be measured.

The carrier unit of Figure 4 has a second objective 39 defining the emission direction 40 of the second distance measurement radiation to be parallel to the target axis 7'. Thereby the second optical transmission channel and the second optical receiving channel pass through the second objective 39. As a result, the arrangement of the first and the second distance measurement radiation emission direction define a biaxial configuration.

The second distance measurement radiation can be generated by the radiation source which is generating the first distance measurement radiation or by a second radiation source 41.

The second distance measurement radiation can be generated by a radiation source being much more powerful than the first radiation source such that the maximum achievable range to diffusely scattering surfaces is longer, for example up to 4 km.

Furthermore, the second optical transmission channel and the second optical receiving channel can be attributed to a second EDM unit 42, wherein the second EDM unit 42 can determine a distance to a natural and/or artificial target to be measured based on the generated second distance measuring data according to the pulse time-of-flight principle. The as-determined distance is an average distance as the second distance measurement radiation returning from the natural target carries distance information from the large area being irradiated by the second distance measurement radiation.

As illustrated in Figure 4 the surveying device can have an optical delay fiber path 43, an internal optical reference path 44 and a Y-type fiber coupler 45. Thereby, the second distance measurement radiation is seeded to the Y-type fiber coupler 45, which sends part of the second distance measurement radiation to the optical delay fiber path 43 and another part typically a percentage of the second distance measurement radiation to the internal optical reference path 44. The part of the second distance measurement radiation passing through the internal optical reference path 44 is reflected onto the receiving aperture 46 lying in the focal plane of the second objective 39 of the second distance measuring sensor 42 and generates upon its detection/sensing by the second distance measuring sensor a start signal indicating a point in time from which the time difference to the point in time when returning second distance measurement radiation is detected/sensed is measured. Based on the measured time difference a distance to the measured target object is determinable by the surveying device. The other part of the second distance measurement radiation passing through the optical delay fiber path 43 is emitted through the optical collimator 38 and depending on the realization also through the second objective 39 towards the natural target. The time delay generated by sending part of the second distance measurement radiation through the optical delay fiber path 43 ensures that the distance dependent time difference can be very accurately measured.

According to a further possible embodiment the above described second optical transmission channel 36 and second optical receiving channel 37 can be comprised by an attachment module. In this case the carrier unit 31 is equipped with a specific device interface which is configured to mechanically and functionally couple the attachment module and components comprised by the attachment module. The attachment module further comprises the second objective 39 and can comprise the second EDM unit as well. The functional coupling provides for a communicative connection between the surveying device and the attachment module, wherein second distance measuring data and/or therefrom derived distances to measured extended natural and artificial targets are accessible and/or processable by the computer of the surveying device. Thereby the position of the attachment module and the emission direction of the second distance measurement radiation in relation to the target axis of the surveying device is defined such that distances measured by the attachment module can be referenced or related to the coordinate system of the opto-electronic surveying instrument.

According to a simplified possible embodiment the above described attachment/ranging module including second optical transmission channel 36 and second optical receiving channel 37 can be integrated and combined with the first ranging module such that the first distance measuring sensor or EDM unit 35 controls and measures the distance of all the measurement beams. In this case the EDM unit 42 would be obsolete.

In **Figure 5** a possible use-case related to measuring for example extended natural targets 47 as indicated. The measurement task relates to monitoring the movement of a specific area 48 of a hillside in order to indicate an upcoming landslide. Therefore, a surveying device 1 according to the invention is positioned in front of the hillside and oriented towards the hillside. In an initialization process the device can be referenced, for example to a global coordinate system or to a local coordinate system, for example, aiding the automatic target recognition functionality within the cooperative reflecting target measurement mode. After initialization procedures the specific area 48 of the hillside which has to be monitored can be defined and referenced to a local or global coordinate system as e.g. the WGS84. In a further step, measurement directions inside the specific monitoring area can be defined. Each measurement direction represents a surface patch of the target 47 or in other words a pixel to which the distance is monitored over time. Starting the monitoring mode, the device will subsequently and repeatedly measure the defined measurement patches/pixels using measurement radiation having a maximum divergence. Thereby the distances, horizontal and vertical angles to the extended targets and their 3D coordinates are determined using either a fast scan-like measurement mode with a data generation frequency of at least 5'000 Points per second (Pts/s), a standard measurement mode with a data generation frequency of less than 5'000 Pts/s, a precise measurement mode with a data generation frequency of less than 1'000 Pts/s or a high accuracy single point measurement mode. The as-generated 3D coordinates of the pixels and their 3D displacement over time allow for the determination of a 3D velocity vector related to the movement of each of the measured pixels on the target surface. Thereby it is highly advantageous to determine the velocity information in three dimensions for accurately determining the movement of the specific area.

For the case when the surveying device is equipped with an ATR unit having imaging functionality with template matching functionality, then the target pixels can be aimed at and scanned in a precise automatic manner. Occurrence of possible mechanical or thermal deviations of the instrument setup is irrelevant to the measurements. At every repeated monitoring sequence, the same sectors or patches are monitored exactly the same way, which delivers a high accuracy of the averaged distance at the specified spatial polar direction. Cooperative reflecting targets 54 as reference points support the definition and control of the setup of the surveying instrument 1 in relation to the reference coordinate system.

## Claims

1. Geodetic surveying device (1) for measuring cooperative reflecting targets and diffusely reflecting targets, with
• a radiation source configured for generating distance measurement radiation,
• a base (2) defining a standing axis (4),
• a support (3) mounted on the base and being rotatable with respect to the base about the standing axis in a motorized manner,
• a carrier unit (4) mounted on the support and being rotatable with respect to the support about an elevation axis (6), being essentially orthogonal to the standing axis, in a motorized manner, the carrier unit being configured for
∘ emitting the distance measurement radiation in the direction of a target axis (7), and
∘ receiving at least part of returning distance measurement radiation from within a receiver field of view, and
comprising a distance measuring sensor configured to determine distance measuring data based on the distance measurement radiation, particularly based on the pulse time-of-flight principle,
• an angle determining unit configured to provide angle determination data for determining a pointing direction (8) of the target axis,
**characterized in that**
• the carrier unit is configured to
• provide for an adaptive selection of at least three different distance measuring beams (9, 10, 11) generated from the distance measurement radiation, each of the three distance measuring beams having a pre-defined beam shape and illuminating a spot area at the target, wherein
▪ a first of the three distance measuring beams (9) has a divergence angle smaller than 1 mrad,
▪ a second of the three distance measuring beams (10) has a divergence angle within a divergence angle range ranging from 1 to 2 mrad, and
▪ a third of the three distance measuring beams (11) has a divergence angle within a divergence angle range ranging from 2 to 15 mrad,
wherein the first of the three distance measuring beams (9) has the smallest divergence in comparison to the second (10) and third (11) of the three distance measuring beams, the second of the three distance measuring beams (10) has a bigger divergence than the first of the three distance measuring beams (9), and the third of the three distance measuring beams (11) has a maximum divergence, wherein the spot area illuminated by the first of the three distance measuring beams (9) is the smallest of the three distance measuring beams (9, 10, 11), the spot area illuminated by the second of the three distance measuring beams (10) is larger than the spot area illuminated by the first of the three distance measuring beams (9), and the spot area illuminated by the third of the three distance measuring beams (11) is larger than the spot area illuminated by the second of the three distance measuring beams (10), and
• detect returning parts of the third distance measuring beam with an associated maximum receiver field of view within a range ranging from 2 to 15 mrad, and
• the geodetic surveying device is configured to use
• the first distance measuring beam (9) to measure diffusely reflecting targets by making a distance to a diffusely reflecting target determinable as a mean distance averaged over the illuminated spot area within the receiver field of view associated with the first distance measuring beam,
• the second distance measuring beam (10) to measure cooperative reflecting targets, and
• the third distance measuring beam (11) to measure diffusely reflecting targets by making a distance to a diffusely reflecting target determinable as a mean distance averaged over the illuminated spot area within the maximum receiver field of view associated with the third distance measuring beam.

2. Geodetic surveying device according to claim 1, the carrier unit further having a telescope unit (12) with a main telescope objective (17), wherein
• the main telescope objective defines the target axis (7), and
• emitted and received distance measurement radiation passes through the main telescope objective.

3. Geodetic surveying device according to any of the preceding claims, wherein the geodetic surveying device comprises a divergence setting unit (22) comprising a set of beam shaping optics (27), particularly wherein the set comprises at least two of a divergence lens, a light diffuser, and a diffractive optical element, particularly a holographic optical element,
in particular wherein the set of beam shaping optics (27) is arranged on a rotatable revolver-carrier (28) or translatable shifting-carrier, wherein the divergence setting unit (22) is configured to provide for the adaptive selection of at least two pre-defined beam shapes of a distance measuring beam by selectively positioning different beam shaping optics of the set of beam shaping optics to be traversed by the emitting distance measurement radiation via rotating the revolver-carrier or translating the translatable shifting-carrier.

4. Geodetic surveying device according to any of the preceding claims, the geodetic surveying device comprising a field of view expander optics (24) being part of a field of view expansion setting unit arranged in the carrier unit, wherein the field of view expansion setting unit is configured to provide for an adaptive selection of at least two different modes of field of view expansion, wherein
• one mode relates to a zero field of view expansion mode providing the receiver field of view being smaller than or equal to 2 mrad, and
• another mode relates to a monitoring field of view expansion mode providing a maximum receiver field of view within the range ranging from 2 to 15 mrad,
in particular wherein the field of view expansion setting unit is configured to provide for at least two different modes of field of view expansion by switchably positioning the field of view expander optics either to be traversed by the at least part of the returning distance measurement radiation or to be passed by the at least part of the returning distance measurement radiation.

5. Geodetic surveying device according to claim 3 and any of the preceding claims, with an optical fiber (21) and fiber-collimator (20), wherein the generated distance measurement radiation is guided from the radiation source (19) by the optical fiber and through the fiber-collimator to the divergence setting unit (22).

6. Geodetic surveying device according to any of the preceding claims, wherein the radiation source (19) is a laser diode seeded
• erbium doped fiber amplified radiation source (EDFA), particularly generating distance measurement radiation having a wavelength in the wavelength range of 1500 to 1600 nm, or
• bismuth-doped phosphosilicate fiber amplified radiation source, particularly generating distance measurement radiation having a wavelength in the wavelength range of 1300 to 1370 nm or
• ytterbium doped fiber amplified radiation source (YDFA), particularly generating distance measurement radiation having a wavelength in the wavelength range of 950 to 1100 nm.

7. Geodetic surveying device according to any of the preceding claims, wherein the feature of the radiation source being configured for generating the distance measurement radiation is embodied by the geodetic surveying device comprising
• a first radiation source (53), in particular a laser diode, configured for generating first distance measurement radiation, in particular in the visible light range, and
• a second radiation source (52), different from the first radiation source, configured for generating second distance measurement radiation, in particular in the near infrared region,
the feature of the carrier unit comprising a distance measuring sensor configured to determine the distance measuring data is embodied by the carrier unit comprising
• a first distance measuring sensor (50), and
• a second distance measuring sensor (51),
wherein
• the first and the second distance measuring beams are generated from the first distance measurement radiation,
• the third distance measuring beam is generated from the second distance measurement radiation,
• the first distance measuring sensor is configured to determine distance measuring data based on first distance measurement radiation, and
• the second distance measuring sensor is configured to determine distance measuring data based on the second distance measurement radiation.

8. Geodetic surveying device according to any of the preceding claims, wherein the feature of the carrier unit comprising a distance measuring sensor configured to determine the distance measuring data is embodied by the carrier unit comprising a first and a second distance measuring sensor,
• the carrier unit having
∘ a first optical transmission channel (32) configured for emitting first distance measurement radiation in the direction of the target axis (7'),
∘ a first optical receiving channel (33) configured for receiving at least part of returning first distance measurement radiation from within a first receiver field of view, particularly being smaller than or equal to 2 mrad, and comprising the first distance measuring sensor configured to determine first distance measuring data based on the first distance measurement radiation, particularly based on the pulse time-of-flight principle,
∘ a second optical transmission channel (36) configured for emitting second distance measurement radiation in an emission direction (40) parallel to the target axis (7'),
∘ a second optical receiving channel (37) configured for receiving at least part of returning second distance measurement radiation from within a second receiver field of view and comprising the second distance measuring sensor configured to determine second distance measuring data based on the second distance measurement radiation, particularly based on the pulse time-of-flight principle,
wherein
• the second optical transmission channel comprises an optical collimator (38) configured to provide the second distance measurement radiation with a maximum divergence angle within a divergence angle range ranging from 2 to 15 mrad, and
• the second optical receiving channel is configured to have a maximum receiver field of view within a range ranging from 2 to 15 mrad, and
• the geodetic surveying device is configured to use
∘ the first distance measurement radiation to measure cooperative reflecting and diffusely reflecting targets based on receiving at least part of returning first distance measurement radiation from within the first receiver field of view, and
∘ the second distance measurement radiation to measure diffusely reflecting targets by making a distance to a diffusely reflecting target determinable as a mean distance averaged over the illuminated spot area within the maximum receiver field of view associated with the second distance measurement radiation.

9. Geodetic surveying device according to claim 8, the carrier unit further having
• a telescope unit with a main telescope objective (34), wherein
□ the main telescope objective defines the target axis (7'), and
□ the first optical transmission channel (32) and the first optical receiving channel (33) pass through the main telescope objective, and
• a second objective (39), wherein
□ the second objective defines the emission direction (40) of the second distance measurement radiation parallel to the target axis (7'), and
□ the second optical transmission channel (36) and the second optical receiving channel (37) pass through the second objective
or
the carrier unit further having
• a telescope unit with a main telescope objective (34), wherein
□ the main telescope objective defines the target axis (7'), and
□ the first optical transmission channel (32) and the first optical receiving channel (33) pass through the main telescope objective,
• a second objective, wherein
□ the second objective defines the emission direction (40) of the second distance measurement radiation parallel to the target axis (7'), and
□ the second optical transmission channel (36) passes through the second objective, and
• a third objective, wherein the second optical receiving channel (37) passes through the third objective.

10. Geodetic surveying device according to any of claims 8 to 9, the first optical transmission channel (32) comprising a divergence setting unit configured to provide for an adaptive selection of at least two pre-defined different divergence angles of the first distance measurement radiation, wherein the two different divergence angles are different from the divergence angle provided by the optical collimator (38) of the second optical transmission channel (36).

11. Geodetic surveying device according to any of claims 8 to 10, with
• a first radiation source and a second radiation source which is different from the first radiation source, wherein the first radiation source is configured to generate the first distance measurement radiation, in particular with a wavelength shorter than 1100 nm, and the second radiation source is configured to generate the second distance measurement radiation, in particular with a wavelength longer than 1000 nm, or
• one radiation source wherein the one radiation source is configured to generate the first and the second distance measurement radiation.

12. Geodetic surveying device according to any of claims 8 to 11, the first optical transmission channel (32) and the first optical receiving channel (33) being attributed to a first electronic distance measurement, EDM, unit (35), and the second optical transmission channel (36) and the second optical receiving channel (37) being attributed to a second electronic distance measurement, EDM, unit (42), wherein the first EDM unit is configured to determine a first distance based on the first distance measuring data and the second EDM unit is configured to determine a second distance based on the second distance measuring data, respectively, in particular wherein the geodetic surveying device comprises a referencing unit configured to reference the first and the second distance with respect to a common frame of reference,
in particular wherein the geodetic surveying device has an optical delay fiber path (43) and an internal optical reference path (44), wherein
• the second optical transmission channel (36) is configured to be seeded with second distance measurement radiation via the optical delay fiber path,
• the second EDM unit (42) is configured to determine the second distance based on
□ at least part of distance measurement radiation returning via an outside target, and
□ distance measurement radiation received by the second distance measuring sensor via the internal optical reference path, and
particularly the geodetic surveying device further has an optical Y-type fiber-coupler (45) being configured to provide part of the second distance measurement radiation to the optical delay fiber path and another part of the second distance measurement radiation to the internal reference path.

13. Geodetic surveying device according to claim 12, the carrier unit comprising an attachment module and a device interface for coupling and de-coupling the attachment module, the attachment module comprising the second optical transmission channel, the second optical receiving channel and the second objective, or the second and third objective, particularly wherein the attachment module further comprises the second EDM unit wherein the first and the second EDM unit are configured to establish a communicative connection with each other.

14. Geodetic surveying device according to any of the preceding claims, with an automatic target recognition, ATR, functionality configured for automatically finding and measuring cooperative reflecting targets and a computer (30) configured for controlling the geodetic device, wherein the computer is configured to provide a controllability of the geodetic device in at least two different measurement modes,
• a first cooperative reflecting target measurement mode related to automatically finding and measuring cooperative reflecting targets (54), aiding the ATR functionality, and
• a second monitoring mode related to measuring diffusely reflecting targets (47) based on
□ using distance measurement radiation having a maximum divergence angle within a divergence angle range ranging from 2 to 15 mrad, and
□ receiving at least part of returning distance measurement radiation from within a maximum receiver field of view within the range ranging from 2 to 15 mrad,
wherein based thereon and based on angle determination data a distance to a diffusely reflecting target and 3D coordinates of the diffusely reflecting target are determinable,
in particular wherein
the computer (30) is configured to provide a controllability of the geodetic device in a further automatic calibration mode, wherein the automatic calibration mode relates to - in a first step - automatically finding and measuring in the cooperative reflecting target measurement mode cooperative reflecting targets, wherein based thereon a reference coordinate system is defined by the computer and - in a second step - switching to the monitoring mode and generating distance measuring data and angle determination data related to measuring diffusely reflecting targets using distance measurement radiation having a maximum divergence angle based on receiving at least part of returning distance measurement radiation from within a maximum receiver field of view and referencing the therefrom generated distances to diffusely reflecting targets and 3D coordinates of diffusely reflecting targets to a common coordinate system, particularly an absolute coordinate system, by the computer based on the reference coordinate system.

15. Geodetic surveying device according to claim 14, wherein generating distance measuring data and angle determination data and based thereon distances to diffusely reflecting targets and 3D coordinates of diffusely reflecting targets in the monitoring mode is based on at least one of the following data generation modes differing from each other at least by a predefined data generation frequency, the data generation modes being,
• a fast measurement mode, particularly with a data generation frequency of at least 5 kPts/s,
• a standard measurement mode, particularly with a data generation frequency of less than 5 kPts/s,
• a precise measurement mode, particularly with a data generation frequency of less than 1 kPts/s, and
• a high accuracy single point measurement mode,
wherein based on as-generated distance measuring data and angle determination data, generated in the course of measuring a diffusely reflecting target (47) a 3D velocity vector and/or a radial velocity related to the movement of the diffusely reflecting target is determinable.

## Patentansprüche

1. Vorrichtung (1) zur geodätischen Vermessung zum Messen kooperativ-reflektierender Ziele und diffus reflektierender Ziele, mit:
• einer Strahlungsquelle, die zum Erzeugen einer Distanzmessstrahlung konfiguriert ist,
• einer Basis (2), die eine stehende Achse (4) definiert,
• einer Stütze (3), die auf der Basis montiert und in Bezug auf die Basis um die stehende Achse motorisiert drehbar ist,
• einer Trägereinheit (4), die auf der Stütze montiert und in Bezug auf die Stütze um eine Elevationsachse (6), die im Wesentlichen vertikal zu der stehenden Achse ist, motorisiert drehbar ist, wobei die Trägereinheit zu Folgendem konfiguriert ist:
∘ Aussenden der Distanzmessstrahlung in die Richtung einer Zielachse (7) und
∘ Empfangen von mindestens einem Teil der zurückkehrenden Distanzmessstrahlung von innerhalb eines Empfänger-Sichtfeldes und
umfassend einen Distanzmesssensor, der dazu konfiguriert ist, Distanzmessdaten basierend auf der Distanzmessstrahlung zu bestimmen, insbesondere basierend auf dem Prinzip der Impulslaufzeit,
• einer Winkelbestimmungseinheit, die dazu konfiguriert ist, Winkelbestimmungsdaten zum Bestimmen einer Zeigerichtung (8) der Zielachse bereitzustellen,
**dadurch gekennzeichnet, dass**
• die Trägereinheit zu Folgendem konfiguriert ist:
• Bereitstellen einer adaptiven Auswahl von mindestens drei unterschiedlichen Distanzmessstrahlen (9, 10, 11), die von der Distanzmessstrahlung erzeugt werden, wobei jeder der drei Distanzmessstrahlen eine vordefinierte Strahlform aufweist und eine Punktfläche an dem Ziel beleuchtet, wobei
• ein erster der drei Distanzmessstrahlen (9) einen Divergenzwinkel kleiner 1 mrad aufweist,
• ein zweiter der drei Distanzmessstrahlen (10) einen Divergenzwinkel innerhalb eines Divergenzwinkelbereichs im Bereich von 1 bis 2 mrad aufweist und
• ein dritter der drei Distanzmessstrahlen (11) einen Divergenzwinkel innerhalb eines Divergenzwinkelbereichs im Bereich von 2 bis 15 mrad aufweist,
wobei der erste der drei Distanzmessstrahlen (9) die kleinste Divergenz im Vergleich zu dem zweiten (10) und dem dritten (11) der drei Distanzmessstrahlen aufweist, der zweite der drei Distanzmessstrahlen (10) eine größere Divergenz als der erste der drei Distanzmessstrahlen (9) aufweist und der dritte der drei Distanzmessstrahlen (11) eine maximale Divergenz aufweist, wobei die Punktfläche, die von dem ersten der drei Distanzmessstrahlen (9) beleuchtet wird, die kleinste der drei Distanzmessstrahlen (9, 10, 11) ist, die Punktfläche, die von dem zweiten der drei Distanzmessstrahlen (10) beleuchtet wird, größer ist, als die Punktfläche, die von dem ersten der drei Distanzmessstrahlen (9) beleuchtet wird, und die Punktfläche, die von dem dritten der drei Distanzmessstrahlen (11) beleuchtet wird, größer ist, als die Punktfläche, die von dem zweiten der drei Distanzmessstrahlen (10) beleuchtet wird, und
• Erfassen von zurückkehrenden Teilen des dritten Distanzmessstrahls mit einem verbundenen maximalen Empfänger-Sichtfeld innerhalb eines Bereichs im Bereich von 2 bis 15 mrad und
• die Vorrichtung zur geodätischen Vermessung dazu konfiguriert ist, Folgendes zu verwenden:
• den ersten Distanzmessstrahl (9), um diffus reflektierende Ziele zu messen, indem eine Distanz zu einem diffus reflektierenden Ziel bestimmbar gemacht wird als eine mittlere Distanz, gemittelt über die beleuchtete Punktfläche innerhalb des Empfänger-Sichtfelds in Verbindung mit dem ersten Distanzmessstrahl,
• den zweiten Distanzmessstrahl (10), um kooperativ-reflektierende Ziele zu messen, und
• den dritten Distanzmessstrahl (11), um diffus reflektierende Ziele zu messen, indem eine Distanz zu einem diffus reflektierenden Ziel bestimmbar gemacht wird als eine mittlere Distanz, gemittelt über die beleuchtete Punktfläche innerhalb des maximalen Empfänger-Sichtfelds in Verbindung mit dem dritten Distanzmessstrahl.

2. Vorrichtung zur geodätischen Vermessung nach Anspruch 1, wobei die Trägereinheit ferner eine Teleskopeinheit (12) mit einem Haupt-Teleskopobjektiv (17) aufweist, wobei
• das Haupt-Teleskopobjektiv die Zielachse (7) definiert und
• die ausgesendete und empfangene Distanzmessstrahlung durch das Haupt-Teleskopobjektiv verläuft.

3. Vorrichtung zur geodätischen Vermessung nach einem der vorhergehenden Ansprüche, wobei die Vorrichtung zur geodätischen Vermessung eine Divergenz-Einstelleinheit (22) umfasst, die eine Reihe von Strahlformungsoptiken (27) umfasst, insbesondere wobei die Reihe mindestens zwei von einer Divergenzlinse, einem Lichtdiffusor und einem optischen Beugungselement, insbesondere einem holografischen optischen Element, umfasst,
insbesondere wobei die Reihe von Strahlformungsoptiken (27) auf einem drehbaren Revolver-Träger (28) oder einem verschiebbaren Wechselträger angeordnet ist, wobei die Divergenz-Einstelleinheit (22) dazu konfiguriert ist, die adaptive Auswahl von mindestens zwei vordefinierten Strahlformen eines Distanzmessstrahls bereitzustellen, durch selektives Positionieren unterschiedlicher Strahlformungsoptiken der Reihe von Strahlformungsoptiken, die von der ausgesendeten Distanzmessstrahlung zu durchqueren sind, durch Drehen des Revolver-Trägers oder Verschieben des verschiebbaren Wechselträgers.

4. Vorrichtung zur geodätischen Vermessung nach einem der vorhergehenden Ansprüche, wobei die Vorrichtung zur geodätischen Vermessung einen Sichtfeld-Strahlaufweiter (24) umfasst, der Teil einer Einstelleinheit zur Sichtfeldaufweitung ist, die in der Trägereinheit angeordnet ist, wobei die Einstelleinheit zur Sichtfeldaufweitung dazu konfiguriert ist, eine adaptive Auswahl von mindestens zwei unterschiedlichen Modi der Sichtfeldaufweitung bereitzustellen, wobei
• sich ein Modus auf einen Null-Sichtfeldaufweitungs-Modus bezieht, der bereitstellt, dass das Empfänger-Sichtfeld kleiner oder gleich 2 mrad ist, und
• sich ein anderer Modus auf einen Überwachungs-Sichtfeldaufweitungs-Modus bezieht, der ein maximales Empfänger-Sichtfeld innerhalb des Bereichs im Bereich von 2 bis 15 mrad bereitstellt,
insbesondere wobei die Einstelleinheit zur Sichtfeldaufweitung dazu konfiguriert ist, mindestens zwei unterschiedliche Modi der Sichtfeldaufweitung bereitzustellen, durch wechselbares Positionieren des Sichtfeld-Strahlaufweiters, der entweder von dem mindestens einen Teil der zurückkehrenden Distanzmessstrahlung zu durchqueren ist oder durch den der mindestens eine Teil der zurückkehrenden Distanzmessstrahlung zu verlaufen hat.

5. Vorrichtung zur geodätischen Vermessung nach Anspruch 3 und einem der vorhergehenden Ansprüche, mit einer Glasfaser (21) und einem Faserkollimator (20), wobei die erzeugte Distanzmessstrahlung ausgehend von der Strahlungsquelle (19) von der Glasfaser und durch den Faserkollimator zu der Divergenz-Einstelleinheit (22) geleitet wird.

6. Vorrichtung zur geodätischen Vermessung nach einem der vorhergehenden Ansprüche, wobei die Strahlungsquelle (19) eine laserdiodengetriebene
• Erbium-dotierte faserverstärkte Strahlungsquelle (EDFA) ist, die insbesondere eine Distanzmessstrahlung erzeugt, die eine Wellenlänge im Wellenlängenbereich von 1500 bis 1600 nm aufweist, oder
• Bismut-dotierte Phosphosilikatfaser-verstärkte Strahlungsquelle ist, die insbesondere eine Distanzmessstrahlung erzeugt, die eine Wellenlänge im Wellenlängenbereich von 1300 bis 1370 nm aufweist, oder
• Ytterbium-dotierte faserverstärkte Strahlungsquelle (YDFA) ist, die insbesondere eine Distanzmessstrahlung erzeugt, die eine Wellenlänge im Wellenlängenbereich von 950 bis 1100 nm aufweist.

7. Vorrichtung zur geodätischen Vermessung nach einem der vorhergehenden Ansprüche, wobei das Merkmal der Strahlungsquelle, die zum Erzeugen der Distanzmessstrahlung konfiguriert ist, dadurch verkörpert ist, dass die Vorrichtung zur geodätischen Vermessung Folgendes umfasst
• eine erste Strahlungsquelle (53), insbesondere eine Laserdiode, die zum Erzeugen einer ersten Distanzmessstrahlung konfiguriert ist, insbesondere im sichtbaren Lichtbereich, und
• eine zweite Strahlungsquelle (52), die sich von der ersten Strahlungsquelle unterscheidet und zum Erzeugen einer zweiten Distanzmessstrahlung konfiguriert ist, insbesondere im nahen Infrarotbereich,
wobei das Merkmal der Trägereinheit, die einen Distanzmesssensor umfasst, der dazu konfiguriert ist, die Distanzmessdaten zu bestimmen, dadurch verkörpert ist, dass die Trägereinheit Folgendes umfasst
• einen ersten Distanzmesssensor (50) und
• einen zweiten Distanzmesssensor (51),
wobei
• der erste und der zweite Distanzmessstrahl aus der ersten Distanzmessstrahlung erzeugt werden,
• der dritte Distanzmessstrahl aus der zweiten Distanzmessstrahlung erzeugt wird,
• der erste Distanzmesssensor dazu konfiguriert ist, Distanzmessdaten basierend auf der ersten Distanzmessstrahlung zu bestimmen, und
• der zweite Distanzmesssensor dazu konfigurierst ist, Distanzmessdaten basierend auf der zweiten Distanzmessstrahlung zu bestimmen.

8. Vorrichtung zur geodätischen Vermessung nach einem der vorhergehenden Ansprüche, wobei das Merkmal der Trägereinheit, die einen Distanzmesssensor umfasst, der dazu konfiguriert ist, die Distanzmessdaten zu bestimmen, dadurch verkörpert ist, dass die Trägereinheit einen ersten und einen zweiten Distanzmesssensor umfasst,
• wobei die Trägereinheit Folgendes aufweist
∘ einen ersten optischen Übertragungskanal (32) der zum Aussenden einer ersten Distanzmessstrahlung in die Richtung der Zielachse (7') konfiguriert ist,
∘ einen ersten optischen Empfangskanal (33), der zum Empfangen von mindestens einem Teil der zurückkehrenden ersten Distanzmessstrahlung von innerhalb eines ersten Empfänger-Sichtfeldes, das insbesondere kleiner oder gleich 2 mrad ist, konfiguriert ist und den ersten Distanzmesssensor umfasst, der dazu konfiguriert ist, erste Distanzmessdaten basierend auf der ersten Distanzmessstrahlung, insbesondere basierend auf dem Prinzip der Impulslaufzeit, zu bestimmen,
∘ einen zweiten optischen Übertragungskanal (36), der zum Aussenden einer zweiten Distanzmessstrahlung in eine Aussenderichtung (40) parallel zur Zielachse (7') konfiguriert ist,
∘ einen zweiten optischen Empfangskanal (37), der zum Empfangen von mindestens einem Teil der zurückkehrenden zweiten Distanzmessstrahlung von innerhalb eines zweiten Empfänger-Sichtfeldes konfiguriert ist und den zweite Distanzmesssensor umfasst, der dazu konfiguriert ist, zweite Distanzmessdaten basierend auf der zweiten Distanzmessstrahlung, insbesondere basierend auf dem Prinzip der Impulslaufzeit, zu bestimmen,
wobei
• der zweite optische Übertragungskanal einen optischen Kollimator (38) umfasst, der dazu konfiguriert ist, die zweite Distanzmessstrahlung mit einem maximalen Divergenzwinkel innerhalb eines Divergenzwinkelbereichs im Bereich von 2 bis 15 mrad bereitzustellen, und
• der zweite optische Empfangskanal dazu konfiguriert ist, ein maximales Empfänger-Sichtfeld innerhalb eines Bereichs im Bereich von 2 bis 15 mrad aufzuweisen, und
• die Vorrichtung zum geodätischen Vermessen dazu konfiguriert ist, Folgendes zu verwenden
∘ die erste Distanzmessstrahlung zum Messen kooperativ-reflektierender und diffus reflektierender Ziele basierend auf dem Empfangen von mindestens einem Teil der zurückkehrenden ersten Distanzmessstrahlung von innerhalb des ersten Empfänger-Sichtfelds und
∘ die zweite Distanzmessstrahlung zum Messen diffus reflektierender Ziele, indem eine Distanz zu einem diffus reflektierenden Ziel bestimmbar gemacht wird als eine mittlere Distanz, gemittelt über die beleuchtete Punktfläche innerhalb des maximalen Empfänger-Sichtfelds in Verbindung mit der zweiten Distanzmessstrahlung.

9. Vorrichtung zur geodätischen Vermessung nach Anspruch 8, wobei die Trägereinheit ferner Folgendes aufweist
• eine Teleskopeinheit mit einem Haupt-Teleskopobjektiv (34), wobei
∘ das Haupt-Teleskopobjektiv die Zielachse (7') definiert und
∘ der erste optische Übertragungskanal (32) und der erste optische Empfangskanal (33) durch das Haupt-Teleskopobjektiv verlaufen, und
• ein zweites Objektiv (39), wobei
∘ das zweite Objektiv die Aussenderichtung (40) der zweiten Distanzmessstrahlung parallel zur Zielachse (7') definiert und
∘ der zweite optische Übertragungskanal (36) und der zweite optische Empfangskanal (37) durch das zweite Objektiv verlaufen
oder
die Trägereinheit ferner Folgendes aufweist
• eine Teleskopeinheit mit einem Haupt-Teleskopobjektiv (34), wobei
∘ das Haupt-Teleskopobjektiv die Zielachse (7') definiert und
∘ der erste optische Übertragungskanal (32) und der erste optische Empfangskanal (33) durch das Haupt-Teleskopobjektiv verlaufen, und
• ein zweites Objektiv, wobei
∘ das zweite Objektiv die Aussenderichtung (40) der zweiten Distanzmessstrahlung parallel zur Zielachse (7') definiert und
∘ der zweite optische Übertragungskanal (36) durch das zweite Objektiv verläuft, und
• ein drittes Objektiv, wobei der zweite optische Empfangskanal (37) durch das dritte Objektiv verläuft.

10. Vorrichtung zur geodätischen Vermessung nach einem der Ansprüche 8 bis 9, wobei der erste optische Übertragungskanal (32) eine Divergenz-Einstelleinheit umfasst, die dazu konfiguriert ist, eine adaptive Auswahl von mindestens zwei vordefinierten unterschiedlichen Divergenzwinkeln der ersten Distanzmessstrahlung bereitzustellen, wobei sich die zwei unterschiedlichen Divergenzwinkel von dem Divergenzwinkel unterscheiden, der von dem optischen Kollimator (38) des zweiten optischen Übertragungskanals (36) bereitgestellt ist.

11. Vorrichtung zur geodätischen Vermessung nach einem der Ansprüche 8 bis 10 mit
• einer ersten Strahlungsquelle und einer zweiten Strahlungsquelle, die sich von der ersten Strahlungsquelle unterscheidet, wobei die erste Strahlungsquelle dazu konfiguriert ist, die erste Distanzmessstrahlung zu erzeugen, insbesondere mit einer Wellenlänge kürzer als 1100 nm, und die zweite Strahlungsquelle dazu konfiguriert ist, die zweite Distanzmessstrahlung zu erzeugen, insbesondere mit einer Wellenlänge länger als 1000 nm, oder
• einer Strahlungsquelle, wobei die eine Strahlungsquelle dazu konfiguriert ist, die erste und die zweite Distanzmessstrahlung zu erzeugen.

12. Vorrichtung zur geodätischen Vermessung nach einem der Ansprüche 8 bis 11, wobei der erste optische Übertragungskanal (32) und der erste optische Empfangskanal (33) einer ersten Einheit (35) zur elektronischen Distanzmessung, EDM, zugeordnet sind und der zweite optische Übertragungskanal (36) und der zweite optische Empfangskanal (37) einer zweiten Einheit (42) zur elektronischen Distanzmessung, EDM, zugeordnet sind, wobei die erste EDM-Einheit dazu konfiguriert ist, eine erste Distanz basierend auf den ersten Distanzmessdaten zu bestimmen, bzw. die zweite EDM-Einheit dazu konfiguriert ist, eine zweite Distanz basierend auf den zweiten Distanzmessdaten zu bestimmen, insbesondere wobei die Vorrichtung zur geodätischen Vermessung eine Referenziereinheit umfasst, die dazu konfiguriert ist, die erste und die zweite Distanz in Bezug auf einen gemeinsamen Referenzrahmen zu referenzieren,
insbesondere wobei die Vorrichtung zur geodätischen Vermessung eine optische Verzögerungs-Faserstrecke (43) und eine interne optische Referenzstrecke (44) aufweist, wobei
• der zweite optische Übertragungskanal (36) dazu konfiguriert ist, über die optische Verzögerungs-Faserstrecke mit der zweiten Distanzmessstrahlung getrieben zu werden,
• die zweite EDM-Einheit (42) dazu konfiguriert ist, die zweite Distanz zu bestimmen, basierend auf
∘ mindestens einem Teil der Distanzmessstrahlung, die über ein Außenziel zurückkehrt und
∘ der Distanzmessstrahlung, die von dem zweiten Distanzmesssensor über die interne optische Referenzstrecke empfangen wird, und
wobei die Vorrichtung zur geodätischen Vermessung ferner insbesondere einen optischen Y-Faserkoppler (45) aufweist, der dazu konfiguriert ist, einen Teil der zweiten Distanzmessstrahlung für die optische Verzögerungs-Faserstrecke und einen anderen Teil der zweiten Distanzmessstrahlung für die interne Referenzstrecke bereitzustellen.

13. Vorrichtung zur geodätischen Vermessung nach Anspruch 12, wobei die Trägereinheit ein Befestigungsmodul und eine Vorrichtungsschnittstelle zum Koppeln und Entkoppeln des Befestigungsmoduls umfasst, wobei das Befestigungsmodul den zweiten optischen Übertragungskanal, den zweiten optischen Empfangskanal und das zweite Objektiv oder das zweite und das dritte Objektiv umfasst, insbesondere wobei das Befestigungsmodul ferner die zweite EDM-Einheit umfasst, wobei die erste und die zweite EDM-Einheit dazu konfiguriert sind, eine kommunikative Verbindung miteinander herzustellen.

14. Vorrichtung zur geodätischen Vermessung nach einem der vorhergehenden Ansprüche mit einer Funktion zur automatischen Zielerkennung, ATR, die zum automatischen Finden und Messen kooperativ-reflektierender Ziele und eines Computers (30) konfiguriert ist, der dazu konfiguriert ist, die geodätische Vorrichtung zu steuern, wobei der Computer dazu konfiguriert ist, eine Steuerbarkeit der geodätischen Vorrichtung in mindestens zwei unterschiedlichen Modi zum Messen bereitzustellen,
• einem ersten Modus zum Messen kooperativ-reflektierender Ziele in Bezug auf das automatische Finden und Messen kooperativ-reflektierender Ziele (54) unter Zuhilfenahme der ATR-Funktion und
• einem zweiten Überwachungsmodus in Bezug auf das Messen diffus reflektierender Ziele (47) basierend auf
∘ Verwenden einer Distanzmessstrahlung, die einen maximalen Divergenzwinkel innerhalb eines Divergenzwinkelbereichs im Bereich von 2 bis 15 mrad aufweist, und
∘ Empfangen von mindestens einem Teil der zurückkehrenden Distanzmessstrahlung von innerhalb eines maximalen Empfänger-Sichtfelds innerhalb des Bereichs im Bereich von 2 bis 15 mrad,
wobei basierend darauf und basierend auf Winkelbestimmungsdaten eine Distanz zu einem diffus reflektierenden Ziel und 3D-Koordinaten des diffus reflektierenden Ziels bestimmbar sind,
insbesondere wobei
der Computer (30) dazu konfiguriert ist, eine Steuerbarkeit der geodätischen Vorrichtung in einem weiteren automatischen Kalibrierungsmodus bereitzustellen, wobei sich der automatische Kalibrierungsmodus auf Folgendes bezieht: in einem ersten Schritt auf automatisches Finden und Messen kooperativ-reflektierender Ziele in dem Modus zum Messen kooperativ-reflektierender Ziele, wobei basierend darauf ein Referenzkoordinatensystem von dem Computer definiert ist, und in einem zweiten Schritt auf Umschalten in den Überwachungsmodus und Erzeugen von Distanzmessdaten und Winkelbestimmungsdaten in Bezug auf das Messen diffus reflektierender Ziele unter Verwendung einer Distanzmessstrahlung, die einen maximalen Divergenzwinkel aufweist, basierend auf dem Empfangen von mindestens einem Teil der zurückkehrenden Distanzmessstrahlung von innerhalb eines maximalen Empfänger-Sichtfelds und Referenzieren der daraus erzeugten Distanzen zu diffus reflektierenden Zielen und 3D-Koordinaten diffus reflektierender Ziele zu einem gemeinsamen Koordinatensystem, insbesondere einem absoluten Koordinatensystem, durch den Computer basierend auf dem Referenzkoordinatensystem.

15. Vorrichtung zur geodätischen Vermessung nach Anspruch 14, wobei das Erzeugen von Distanzmessdaten und Winkelbestimmungsdaten und basierend darauf Distanzen zu diffus reflektierenden Zielen und 3D-Koordinaten diffus reflektierender Ziele in dem Überwachungsmodus auf mindestens einem der folgenden Datenerzeugungsmodi basiert, die sich mindestens durch eine vordefinierte Datenerzeugungsfrequenz voneinander unterscheiden, wobei die Datenerzeugungsmodi die Folgenden sind:
• ein Schnellmessmodus, insbesondere mit einer Datenerzeugungsfrequenz von mindestens 5 kPts/s,
• ein Standardmessmodus, insbesondere mit einer Datenerzeugungsfrequenz von weniger als 5 kPts/s,
• ein präziser Messmodus, insbesondere mit einer Datenerzeugungsfrequenz von weniger als 1 kPts/s und
• ein Einzelpunkt-Messmodus mit hoher Genauigkeit,
wobei basierend auf erzeugten Distanzmessdaten und Winkelbestimmungsdaten, die im Verlauf des Messens eines diffus reflektierenden Ziels (47) erzeugt wurden, ein 3D-Geschwindigkeitsvektor und/oder eine radiale Geschwindigkeit in Bezug auf die Bewegung des diffus reflektierenden Ziels bestimmbar ist.

## Revendications

1. Dispositif de relevé géodésique (1) pour mesurer des cibles réfléchissantes coopératives et des cibles réfléchissant de manière diffuse, comprenant
• une source de rayonnement configurée pour générer un rayonnement de mesure de distance,
• une base (2) définissant un axe vertical (4),
• un support (3) monté sur la base et pouvant tourner par rapport à la base autour de l'axe vertical de manière motorisée,
• une unité porteuse (4) montée sur le support et pouvant tourner par rapport au support autour d'un axe d'élévation (6), essentiellement orthogonal à l'axe vertical, de manière motorisée, l'unité porteuse étant configurée pour
∘ émettre le rayonnement de mesure de distance dans la direction d'un axe cible (7), et
∘ recevoir au moins une partie du rayonnement de mesure de distance de retour provenant de l'intérieur d'un champ de vision de récepteur, et
comprenant un capteur de mesure de distance configuré pour déterminer des données de mesure de distance sur la base du rayonnement de mesure de distance, en particulier sur la base du principe du temps de vol des impulsions,
• une unité de détermination d'angle configurée pour fournir des données de détermination d'angle afin de déterminer une direction de pointage (8) de l'axe cible,
**caractérisé en ce que**
• l'unité porteuse est configurée pour
• permettre une sélection adaptative d'au moins trois faisceaux de mesure de distance différents (9, 10, 11) générés à partir du rayonnement de mesure de distance, chacun des trois faisceaux de mesure de distance ayant une forme de faisceau prédéfinie et éclairant une zone ponctuelle sur la cible, dans lequel
▪ un premier des trois faisceaux de mesure de distance (9) a un angle de divergence inférieur à 1 mrad,
▪ un deuxième des trois faisceaux de mesure de distance (10) a un angle de divergence compris dans une plage d'angles de divergence allant de 1 à 2 mrad, et
▪ un troisième des trois faisceaux de mesure de distance (11) a un angle de divergence compris dans une plage d'angles de divergence allant de 2 à 15 mrad,
dans lequel le premier des trois faisceaux de mesure de distance (9) a la plus petite divergence par rapport au deuxième (10) et au troisième (11) des trois faisceaux de mesure de distance, le deuxième des trois faisceaux de mesure de distance (10) a une divergence plus grande que le premier des trois faisceaux de mesure de distance (9), et le troisième des trois faisceaux de mesure de distance (11) a une divergence maximale, dans lequel la zone ponctuelle éclairée par le premier des trois faisceaux de mesure de distance (9) est la plus petite des trois faisceaux de mesure de distance (9, 10, 11), la zone ponctuelle éclairée par le deuxième des trois faisceaux de mesure de distance (10) est plus grande que la zone ponctuelle éclairée par le premier des trois faisceaux de mesure de distance (9), et la zone ponctuelle éclairée par le troisième des trois faisceaux de mesure de distance (11) est plus grande que la zone ponctuelle éclairée par le deuxième des trois faisceaux de mesure de distance (10), et
• détecter les parties de retour du troisième faisceau de mesure de distance avec un champ de vision de récepteur maximal associé dans une plage comprise entre 2 et 15 mrad, et
• le dispositif de relevé géodésique est configuré pour utiliser
• le premier faisceau de mesure de distance (9) pour mesurer des cibles réfléchissant de manière diffuse en rendant une distance à une cible réfléchissant de manière diffuse déterminable comme une distance moyenne calculée sur la zone ponctuelle éclairée dans le champ de vision de récepteur associé au premier faisceau de mesure de distance,
• le deuxième faisceau de mesure de distance (10) pour mesurer des cibles réfléchissantes coopératives, et
• le troisième faisceau de mesure de distance (11) pour mesurer des cibles réfléchissant de manière diffuse en rendant une distance à une cible réfléchissant de manière diffuse déterminable comme une distance moyenne calculée sur la zone ponctuelle éclairée dans le champ de vision de récepteur maximal associé au troisième faisceau de mesure de distance.

2. Dispositif de relevé géodésique selon la revendication 1, l'unité porteuse comportant en outre une unité de télescope (12) avec un objectif de télescope principal (17), dans lequel
• l'objectif de télescope principal définit l'axe cible (7), et
• le rayonnement de mesure de distance émis et reçu passe à travers l'objectif de télescope principal.

3. Dispositif de relevé géodésique selon l'une quelconque des revendications précédentes, dans lequel le dispositif de relevé géodésique comprend une unité de réglage de divergence (22) comprenant un ensemble d'optiques de mise en forme de faisceau (27), en particulier dans lequel l'ensemble comprend au moins deux éléments parmi une lentille de divergence, un diffuseur de lumière et un élément optique diffractif, en particulier un élément optique holographique,
en particulier dans lequel l'ensemble d'optiques de mise en forme de faisceau (27) est disposé sur un support revolver rotatif (28) ou un support de déplacement translatable, dans lequel l'unité de réglage de divergence (22) est configurée pour permettre la sélection adaptative d'au moins deux formes de faisceau prédéfinies d'un faisceau de mesure de distance en positionnant de manière sélective différentes optiques de mise en forme de faisceau de l'ensemble d'optiques de mise en forme de faisceau afin qu'elles soient traversées par le rayonnement de mesure de distance émis en faisant tourner le support revolver ou en translatant le support de déplacement translatable.

4. Dispositif de relevé géodésique selon l'une quelconque des revendications précédentes, le dispositif de relevé géodésique comprenant une optique d'extension du champ de vision (24) faisant partie d'une unité de réglage d'extension du champ de vision disposée dans l'unité porteuse, dans lequel l'unité de réglage d'extension du champ de vision est configurée pour permettre une sélection adaptative d'au moins deux modes différents d'extension du champ de vision, dans lequel
• un mode concerne un mode d'extension du champ de vision nul fournissant un champ de vision de récepteur inférieur ou égal à 2 mrad, et
• un autre mode concerne un mode d'extension du champ de vision de surveillance fournissant un champ de vision de récepteur maximal compris entre 2 et 15 mrad,
en particulier dans lequel l'unité de réglage d'extension du champ de vision est configurée pour fournir au moins deux modes différents d'extension du champ de vision en positionnant de manière commutable l'optique d'extension du champ de vision soit pour qu'elle soit traversée par ladite au moins une partie du rayonnement de mesure de distance de retour, soit pour qu'elle soit passée par ladite au moins une partie du rayonnement de mesure de distance de retour.

5. Dispositif de relevé géodésique selon la revendication 3 et l'une quelconque des revendications précédentes, avec une fibre optique (21) et un collimateur à fibre (20), dans lequel le rayonnement de mesure de distance généré est guidé depuis la source de rayonnement (19) par la fibre optique et à travers le collimateur à fibre vers l'unité de réglage de divergence (22).

6. Dispositif de relevé géodésique selon l'une quelconque des revendications précédentes, dans lequel la source de rayonnement (19) est
• une source de rayonnement amplifiée par fibre dopée à l'erbium (EDFA), générant en particulier un rayonnement de mesure de distance ayant une longueur d'onde dans la plage de longueurs d'onde de 1500 à 1600 nm, ou
• une source de rayonnement amplifiée par fibre dopée au bismuth, générant en particulier un rayonnement de mesure de distance ayant une longueur d'onde comprise dans la plage de longueurs d'onde de 1300 à 1370 nm ou
• une source de rayonnement amplifiée par fibre dopée à l'ytterbium (YDFA), générant en particulier un rayonnement de mesure de distance ayant une longueur d'onde comprise dans la plage de longueurs d'onde de 950 à 1100 nm,
alimentées par diode laser.

7. Dispositif de relevé géodésique selon l'une quelconque des revendications précédentes, dans lequel la caractéristique de la source de rayonnement configurée pour générer le rayonnement de mesure de distance est matérialisée par le fait que le dispositif de relevé géodésique comprend
• une première source de rayonnement (53), en particulier une diode laser, configurée pour générer un premier rayonnement de mesure de distance, en particulier dans la gamme de la lumière visible, et
• une deuxième source de rayonnement (52), différente de la première source de rayonnement, configurée pour générer un deuxième rayonnement de mesure de distance, en particulier dans la région du proche infrarouge,
la caractéristique de l'unité porteuse comprenant un capteur de mesure de distance configuré pour déterminer les données de mesure de distance est matérialisée par le fait que l'unité porteuse comprend
• un premier capteur de mesure de distance (50), et
• un deuxième capteur de mesure de distance (51),
dans lequel
• les premier et deuxième faisceaux de mesure de distance sont générés à partir du premier rayonnement de mesure de distance,
• le troisième faisceau de mesure de distance est généré à partir du deuxième rayonnement de mesure de distance,
• le premier capteur de mesure de distance est configuré pour déterminer des données de mesure de distance sur la base du premier rayonnement de mesure de distance, et
• le deuxième capteur de mesure de distance est configuré pour déterminer des données de mesure de distance sur la base du deuxième rayonnement de mesure de distance.

8. Dispositif de relevé géodésique selon l'une quelconque des revendications précédentes, dans lequel la caractéristique de l'unité porteuse comprenant un capteur de mesure de distance configuré pour déterminer les données de mesure de distance est matérialisée par le fait que l'unité porteuse comprend un premier et un deuxième capteurs de mesure de distance,
• l'unité porteuse comportant
∘ un premier canal d'émission optique (32) configuré pour émettre un premier rayonnement de mesure de distance dans la direction de l'axe cible (7'),
∘ un premier canal de réception optique (33) configuré pour recevoir au moins une partie du premier rayonnement de mesure de distance de retour provenant de l'intérieur d'un premier champ de vision de récepteur, en particulier inférieur ou égal à 2 mrad, et comprenant le premier capteur de mesure de distance configuré pour déterminer des premières données de mesure de distance sur la base du premier rayonnement de mesure de distance, en particulier sur la base du principe du temps de vol des impulsions,
∘ un deuxième canal d'émission optique (36) configuré pour émettre un deuxième rayonnement de mesure de distance dans une direction d'émission (40) parallèle à l'axe cible (7'),
∘ un deuxième canal de réception optique (37) configuré pour recevoir au moins une partie du rayonnement de mesure de distance de retour provenant de l'intérieur d'un deuxième champ de vision de récepteur et comprenant le deuxième capteur de mesure de distance configuré pour déterminer des deuxièmes données de mesure de distance sur la base du deuxième rayonnement de mesure de distance, en particulier sur la base du principe du temps de vol des impulsions,
dans lequel
• le deuxième canal d'émission optique comprend un collimateur optique (38) configuré pour fournir au deuxième rayonnement de mesure de distance un angle de divergence maximal compris dans une plage d'angles de divergence allant de 2 à 15 mrad, et
• le deuxième canal de réception optique est configuré pour avoir un champ de vision de récepteur maximal compris dans une plage allant de 2 à 15 mrad, et
• le dispositif de relevé géodésique est configuré pour utiliser
∘ le premier rayonnement de mesure de distance pour mesurer des cibles réfléchissantes coopératives et réfléchissant de manière diffuse sur la base de la réception d'au moins une partie du premier rayonnement de mesure de distance de retour provenant de l'intérieur du premier champ de vision de récepteur, et
∘ le deuxième rayonnement de mesure de distance pour mesurer des cibles réfléchissant de manière diffuse en rendant la distance à une cible réfléchissant de manière diffuse déterminable comme une distance moyenne calculée sur la zone ponctuelle éclairée à l'intérieur du champ de vision de récepteur maximal associé au deuxième rayonnement de mesure de distance.

9. Dispositif de relevé géodésique selon la revendication 8, l'unité porteuse comportant en outre
• une unité de télescope avec un objectif de télescope principal (34), dans lequel
□ l'objectif de télescope principal définit l'axe cible (7'), et
□ le premier canal d'émission optique (32) et le premier canal de réception optique (33) passent à travers l'objectif de télescope principal, et
• un deuxième objectif (39), dans lequel
□ le deuxième objectif définit la direction d'émission (40) du deuxième rayonnement de mesure de distance parallèlement à l'axe cible (7'), et
□ le deuxième canal d'émission optique (36) et le deuxième canal de réception optique (37) passent à travers le deuxième objectif
ou
l'unité porteuse comportant en outre
• une unité de télescope avec un objectif de télescope principal (34), dans lequel
□ l'objectif de télescope principal définit l'axe cible (7'), et
□ le premier canal d'émission optique (32) et le premier canal de réception optique (33) passent à travers l'objectif de télescope principal,
• un deuxième objectif, dans lequel
□ le deuxième objectif définit la direction d'émission (40) du deuxième rayonnement de mesure de distance parallèlement à l'axe cible (7'), et
□ le deuxième canal d'émission optique (36) passe à travers le deuxième objectif, et
• un troisième objectif, dans lequel le deuxième canal de réception optique (37) passe à travers le troisième objectif.

10. Dispositif de relevé géodésique selon l'une quelconque des revendications 8 à 9, le premier canal d'émission optique (32) comprenant une unité de réglage de divergence configurée pour permettre une sélection adaptative d'au moins deux angles de divergence différents prédéfinis du premier rayonnement de mesure de distance, dans lequel les deux angles de divergence différents sont différents de l'angle de divergence fourni par le collimateur optique (38) du deuxième canal d'émission optique (36).

11. Dispositif de relevé géodésique selon l'une quelconque des revendications 8 à 10, comportant
• une première source de rayonnement et une deuxième source de rayonnement qui est différente de la première source de rayonnement, dans lequel la première source de rayonnement est configurée pour générer le premier rayonnement de mesure de distance, en particulier avec une longueur d'onde inférieure à 1100 nm, et la deuxième source de rayonnement est configurée pour générer le deuxième rayonnement de mesure de distance, en particulier avec une longueur d'onde supérieure à 1000 nm, ou
• une source de rayonnement, dans lequel la source de rayonnement est configurée pour générer le premier et le deuxième rayonnement de mesure de distance.

12. Dispositif de relevé géodésique selon l'une quelconque des revendications 8 à 11, le premier canal d'émission optique (32) et le premier canal de réception optique (33) étant attribués à une première unité de mesure de distance électronique, EDM, (35), et le deuxième canal d'émission optique (36) et le deuxième canal de réception optique (37) étant attribués à une deuxième unité de mesure de distance électronique, EDM, (42), dans lequel la première unité EDM est configurée pour déterminer une première distance sur la base des premières données de mesure de distance et la deuxième unité EDM est configurée pour déterminer une deuxième distance sur la base des deuxièmes données de mesure de distance, respectivement, en particulier dans lequel le dispositif de relevé géodésique comprend une unité de référencement configurée pour référencer la première et la deuxième distance par rapport à un cadre de référence commun,
en particulier dans lequel le dispositif de relevé géodésique comporte un chemin de fibre à retard optique (43) et un chemin de référence optique interne (44), dans lequel
• le deuxième canal d'émission optique (36) est configuré pour être alimenté avec un deuxième rayonnement de mesure de distance via le chemin de fibre à retard optique,
• la deuxième unité EDM (42) est configurée pour déterminer la deuxième distance sur la base
□ au moins une partie du rayonnement de mesure de distance de retour via une cible extérieure, et
□ le rayonnement de mesure de distance reçu par le deuxième capteur de mesure de distance via le chemin de référence optique interne, et
en particulier le dispositif de relevé géodésique comporte en outre un coupleur optique à fibre de type Y (45) configuré pour fournir une partie du deuxième rayonnement de mesure de distance au chemin de fibre à retard optique et une autre partie du deuxième rayonnement de mesure de distance au chemin de référence interne.

13. Dispositif de relevé géodésique selon la revendication 12, l'unité porteuse comprenant un module de fixation et une interface de dispositif pour coupler et découpler le module de fixation, le module de fixation comprenant le deuxième canal d'émission optique, le deuxième canal de réception optique et le deuxième objectif, ou les deuxième et troisième objectifs, en particulier dans lequel le module de fixation comprend en outre la deuxième unité EDM, dans lequel la première et la deuxième unité EDM sont configurées pour établir une liaison de communication entre elles.

14. Dispositif de relevé géodésique selon l'une quelconque des revendications précédentes, avec une fonctionnalité de reconnaissance automatique de cible, ATR, configurée pour trouver et mesurer automatiquement des cibles réfléchissantes coopératives et un ordinateur (30) configuré pour commander le dispositif géodésique, dans lequel l'ordinateur est configuré pour fournir une commandabilité du dispositif géodésique dans au moins deux modes de mesure différents,
• un premier mode de mesure de cibles réfléchissantes coopératives lié à la recherche et à la mesure automatiques de cibles réfléchissantes coopératives (54), aidant la fonctionnalité ATR, et
• un deuxième mode de surveillance lié à la mesure de cibles réfléchissant de manière diffuse (47) sur la base de
□ l'utilisation d'un rayonnement de mesure de distance ayant un angle de divergence maximal compris dans une plage d'angles de divergence allant de 2 à 15 mrad, et
□ la réception d'au moins une partie du rayonnement de mesure de distance de retour provenant d'un champ de vision de récepteur maximal compris dans la plage allant de 2 à 15 mrad,
dans lequel, sur cette base et sur la base de données de détermination d'angle, une distance à une cible réfléchissant de manière diffuse et des coordonnées 3D de la cible réfléchissant de manière diffuse peuvent être déterminées,
en particulier dans lequel
l'ordinateur (30) est configuré pour fournir une commandabilité du dispositif géodésique dans un autre mode d'étalonnage automatique, dans lequel le mode d'étalonnage automatique concerne - dans une première étape - la recherche et la mesure automatiques, dans le mode de mesure de cibles réfléchissantes coopératives, de cibles réfléchissantes coopératives sur la base desquelles un système de coordonnées de référence est défini par l'ordinateur et - dans une deuxième étape - le passage au mode de surveillance et la génération de données de mesure de distance et de données de détermination d'angle liées à la mesure de cibles réfléchissant de manière diffuse à l'aide d'un rayonnement de mesure de distance ayant un angle de divergence maximal sur la base de la réception d'au moins une partie du rayonnement de mesure de distance de retour provenant de l'intérieur d'un champ de vision de récepteur maximal et le référencement des distances ainsi générées à des cibles réfléchissant de manière diffuse et des coordonnées 3D de cibles réfléchissant de manière diffuse à un système de coordonnées commun, en particulier un système de coordonnées absolu, par l'ordinateur sur la base du système de coordonnées de référence.

15. Dispositif de relevé géodésique selon la revendication 14, dans lequel la génération de données de mesure de distance et de données de détermination d'angle et, sur cette base, de distances par rapport à des cibles réfléchissant de manière diffuse et de coordonnées 3D de cibles réfléchissant de manière diffuse dans le mode de surveillance est basée sur au moins l'un des modes de génération de données suivants, qui diffèrent les uns des autres au moins par une fréquence de génération de données prédéfinie, les modes de génération de données étant les suivants :
• un mode de mesure rapide, en particulier avec une fréquence de génération de données d'au moins 5 kPts/s,
• un mode de mesure standard, en particulier avec une fréquence de génération de données inférieure à 5 kPts/s,
• un mode de mesure précis, en particulier avec une fréquence de génération de données inférieure à 1 kPts/s, et
• un mode de mesure monopoint de haute précision,
dans lequel, sur la base des données de mesure de distance et des données de détermination d'angle générées au cours de la mesure d'une cible réfléchissant de manière diffuse (47), un vecteur de vitesse 3D et/ou une vitesse radiale liés au mouvement de la cible réfléchissant de manière diffuse peuvent être déterminés.
